# EUROPÄISCHE PATENTSCHRIFT

(11) **EP 1 037 185 B1**
(45) Veröffentlichungstag und Bekanntmachung des Hinweises auf die Patenterteilung: **07.05.2008**
(21) Anmeldenummer: 00104739.8
(22) Anmeldetag: 04.03.2000
(51) Int. Cl.: G08C 17/02

(54) **Verfahren zur Übertragung von Daten**
Method for data transmission
Méthode de transmission de données

(30) Priorität: 16.03.1999 DE 19911657
(43) Veröffentlichungstag der Anmeldung: 20.09.2000
(73) Patentinhaber: Ziegler, Horst Prof. Dr., D-33100 Paderborn (DE)
(72) Erfinder: Ziegler, Horst Prof. Dr., D-33100 Paderborn (DE)
(74) Vertreter: Ostertag, Reinhard

(56) Entgegenhaltungen:
- DE-A1- 4 225 042
- DE-A1- 19 548 650
- US-A- 5 764 158

## Beschreibung

Die Erfindung betrifft ein Verfahren zur Übertragung von Daten von einer Mehrzahl von Sammelstationen für Daten zu einer Verwaltungsstation für Daten gemäß dem Oberbegriff des Anspruchs 1.

Ein derartiges Verfahren ist in der US 5 764 158 A offenbart.

Bei ihm werden einige der Sammelstationen zugleich auch als Relais- oder Zwischenstationen verwendet, über welche solche Sammelstationen, die nicht in direktem Funkkontakt mit der Verwaltungsstation stehen, ihre Daten an die Verwaltungsstation übermitteln können. Die verschiedenen Sammelstationen bilden so zusammen mit der Verwaltungsstation ein Datenübertragungsnetz mit baumähnlicher Struktur. Dabei kann man jeder der Sammelstationen eine Hierarchienummer zuordnen, die angibt, über wieviele andere Sammelstationen die Datenübertragung zur Verwaltungsstation hin erfolgt.

Bei diesem bekannten Verfahren sind die Empfangseinheiten und Sendeeinheiten dauernd mit der Stromversorgung verbunden. Nun ist es für viele Anwendungen wünschenswert,
daß die Stromversorgung aus Batterien erfolgt. In diesem Falle braucht man zu den einzelnen Sammelstationen keine Netzleitungen zu legen, ist also frei in der Wahl ihres Anbringungsortes, und die Funktionsfähigkeit des Netzes ist auch dann gewährleistet, wenn die Netzversorgung zusammenbricht oder manipuliert wird.

In der DE 42 250 42 A1 ist ein Verfahren beschrieben, welches gestattet, von einer Vielzahl von Verbrauchsmessern die Zählerstände preisgünstig und stromsparend von den Verbrauchsmessern zu einer Sammelstation für die Zählerstände zu übertragen. Hierzu sind die einzelnen Verbrauchsmesser nur mit Sendeeinheiten versehen, die zu stochastisch vorgegebenen Zeitpunkten den Zählerstand an die Sammelstation senden. Oft sind nun Wohnanlagen aber so groß, daß eine einzige Sammelstation für die Verbrauchswerte nicht ausreicht. In anderen Wohnanlagen sind die funktechnischen Verhältnisse so ungünstig, daß nicht alle Verbrauchsmesser direkt an eine einzige Sammelstation senden können. Oft werden auch aus Sicherheitsgründen mehrere Sammelstationen vorgesehen, um die Meßdaten eines einzigen Verbrauchsmessers von zwei oder mehr Sammelstationen erfassen zu können. Bei derartig ausgelegten Verbrauchserfassungsanlagen muß dann ein Ableser mehrere Sammelstationen aufsuchen und die dort gespeicherten Daten übernehmen.

Soweit nachstehend eine Unterscheidung zwischen der Verwaltungsstation und den Sammelstationen des Funknetzes nicht unterschieden werden muß, wird einfach von den Stationen oder einer Station des Netzwerkes gesprochen.

Durch die vorliegende Erfindung soll daher ein Verfahren der eingangs angesprochenen Art geschaffen werden, welches das Sammeln aller erfaßten Daten an einer einzigen Verwaltungsstation für Daten ermöglicht, bei welchem jedoch zugleich auch gewährleistet ist, daß der Energieverbrauch so klein ist, daß mit den gängigen Langzeitbatterien Betriebsdauern in der Größenordnung von 5 bis 10 Jahren erreicht werden.

Diese Aufgabe ist erfindungsgemäß gelöst durch ein Verfahren mit den im Anspruch 1 angegebenen Merkmalen.

Bei Anwendung des erfindungsgemäßen Verfahrens ist die mit dem Auslesen der Verbrauchsdaten verbundene Arbeit stark reduziert, da dies an einer einzigen Verwaltungsstation erfolgen kann. Man kann dort auch den Aufwand treiben, eine verhältnismäßig teure Datenfernübertragungseinrichtung (Telefon- oder Funkmodem oder ein anderes Funksystem mit großer Reichweite) vorzusehen, so daß das Auslesen der Zählerstände vollständig ohne menschliches Eingreifen erfolgen kann.

Bei dem erfindungsgemäßen Verfahren wird die Zeit, in welcher eine Datenübertragung stattfindet, in spezieller Weise organisiert. Den verschiedenen Sammelstationen werden gewisse Zeitschlitze zugeordnet, in welchen ihnen der zur Datenübertragung verwendete gemeinsame Funkkanal ausschließlich zur Verfügung gestellt wird. Diese Zeitschlitze bilden zusammen einen Zeitschlitzblock. Zusätzlich ist erfindungsgemäß vorgesehen, daß man für diejenigen Sammelstationen, die unterschiedliche Hierarchienummer aufweisen, Zeitschlitzblöcke unterschiedlicher Hierarchienummer vorsieht. Die Gesamtheit der Zeitschlitzblöcke unterschiedlicher Hierarchie bilden zusammen eine Zeitspanne, die nachstehend als Zeitsegment bezeichnet wird.

Diese Art der Organisation der Datenübertragung ermöglicht es, die verschiedenen Sammelstationen nur für genau vorgegebene kurze Zeitspannen für ein Senden von Daten bzw. ein Empfangen von Daten zu aktivieren. Diese Aktivierungszeiten sind verglichen mit der Gesamtlänge eines Zeitsegmentes nur kurz, so daß man einen mittleren Strombedarf einer Sammelstation von nur 1 bis 3µA erhält.

Bei typischen Objektgrößen muß eine Anlage zur automatischen Auslesung von Zählerständen etwa 30 Sammelstationen und bis zu 500 Verbrauchszähler umfassen. Dies läßt sich mit dem erfindungsgemäßen Verfahren leicht realisieren, wobei man mit dem erfindungsgemäßen Verfahren sowohl bei optimalen Funkverbindungen (alle Sammelstationen haben direkte Funkverbindung zur Verwaltungsstation; Sterntopologie) und auch extrem schlechten Funkbedingungen (nur eine Sammelstation hat direkten Funkkontakt zur Verwaltungsstation, alle anderen Stationen müssen jeweils über Relaisstationen bildende weitere Sammelstationen zur Verwaltungsstation Daten übertragen; Kettentopologie) Rechnung tragen kann. Auch beliebige gemischte baum- oder sternartige Topologien des Funknetzes können nach dem erfindungsgemäßen Verfahren definiert und verwendet werden.

Die Qualität des Funkkontaktes einer Sammelstation zur Verwaltungsstation hängt zum einen von festen Gegebenheiten ab, z.B. von in der Verbindungslinie stehenden Hindernissen und Fertigungstoleranzen der Sammelstationen, welche die Sendeleistung und/oder die Empfangsempfindlichkeit betreffen. Dabei können je nach den vorliegenden Fertigungsungenauigkeiten auch Unsymmetrien der Datenübertragung auftreten, so daß z.B. die Sammelstation A die Sammelstation B empfangen kann, nicht aber die Sammelstation B die Sammelstation A. Gleiches gilt für die Funkkontakte zwischen den Sammelstationen und der Verwaltungsstation.

Zu diesen festen Gegebenheiten kommen noch Änderungen in der Funktopologie, die vorübergehender Art sind, z.B. Abschattungen durch unterschiedliche Stellung von Türen, Möbeln usw.. Derartigen Änderungen in der Qualität der Funktopologie des Netzes kann man bei Anwendung des erfindungsgemäßen Verfahrens auf einfache Weise Rechnung tragen; das Funknetz kann sich von selbst an die jeweils herrschenden Verhältnisse in Abständen anpassen.

Auch Eigen- und Fremdstörer können zu kurzzeitigen Beeinträchtigungen von einzelnen Funkverbindungen führen. In solchen Fällen ist es oft nicht lohnend, eine komplett neue Funktopologie aufzubauen, da solche Störungen oft rasch wieder verschwinden. Bei Anwendung des erfindungsgemäßen Verfahrens kann man in solchen Fällen auf einfache Weise redundante Funkverbindungen als Ausweichlösungen einsetzen.

Durch die erfindungsgemäße Strukturierung der Datenübertragung auf der Basis von Zeitschlitzen, Zeitblöcken und Zeitsegmenten ist auch automatisch gewährleistet, daß die für Jedermanns-Bänder zulässige Belegungszeit durch jede Sammelstation bzw. Verwaltungsstation zwischen 0,1% und 1% pro Stunde liegt (je nach Frequenzband).

Bei dem erfindungsgemäßen Verfahren ist es auch nicht notwendig, daß die Sammelstationen die Daten aller Zählerstände von angeschlossenen Verbrauchsmessern zwischenspeichern. Man kommt ohne Datenstau beim Zusammenlaufen von Datenströmen an einem Knoten ohne große Zwischenpuffer aus, obwohl die oben genannten Beschränkungen bezüglich Stromverbrauchs und maximale Belegung der Funkzeit bestehen. Für die Praxis ist es ausreichend, wenn die Zählerstände der Verbrauchsmesser nur zwei Mal pro Monat abgelesen werden. Um die oben genannte Betriebsdauer von 5 bis 10 Jahren ohne Batteriewechsel zu gewährleisten, darf aber die zu aktualisierende Topologie-Analyse nur wenig Funk-Kommunikation erfordern. Dies ist bei Anwendung des erfindungsgemäßen Verfahrens der Fall.

Vorzugsweise wird bei dem erfindungsgemäßen Verfahren auch die Zeit klein gehalten, in welcher die Empfangseinheiten der Sammelstationen und der Verwaltungsstation eingeschaltet werden. Die zum Betreiben der Empfangsstationen notwendigen Ströme sind zwar kleiner als die zum Treiben der Sendeeinheiten, sie betragen aber typischerweise noch 50% des Sendestromes.

In den Patentansprüchen und in der vorliegenden Beschreibung sollen unter dem Begriff Sammelstation nicht nur solche Stationen verstanden werden, die die Zählerstände einer Vielzahl von Verbrauchsmessern erhalten und diese Daten dann an die Verwaltungsstation weitergeben, sondern auch solche Stationen, die direkt einen Verbrauchsmesser enthalten, wobei diese Stationen dann zusätzlich noch als Relaisstationen dienen können oder auch nicht, und auch Stationen, die nur der Funkübertragung im Netz dienen.

Wo von Verbrauchszählern gesprochen wird, sollen hierunter sowohl solche verstanden werden, die als Ausgangssignal den Zählerstand abgeben, als auch solche, die nur Inkremente des Verbrauchs an ihrem Ausgang bereitstellen,
wobei die Integration der Verbrauchsinkremente dann einer nachgeordneten Datenverarbeitungsstation bestimmt werden, die auch durch eine Station des Netzwerkes gebildet sein kann.

Generell kann die Übernahme von Daten von einem Verbrauchsmesser durch eine Sammelstation über Leitungen, Funk, optisch oder sonstig (z.B. Ultraschall) erfolgen.

Vorteilhafte Weiterbildungen der Erfindung sind in Unteransprüchen angegeben.

Die Erfindung wird nachstehend anhand von Ausführungsbeispielen unter Bezugnahme auf die Zeichnung näher erläutert. In dieser zeigen:
- Figur 1:: eine räumliche Darstellung der Anordnung verschiedener Datensammelstationen und einer Datenverwaltungsstation eines Funknetzes, welches zum Auslesen von Verbrauchsmessern dient;
- Figur 2:: eine Darstellung des in Figur 1 gezeigten Funknetzes, wobei die Verwaltungsstation und die Sammelstationen nach Hierarchienummern geordnet wiedergegeben sind;
- Figur 3:: das in Figur 2 gezeigte nach Hierarchienummern geordnete Funknetz zusammen mit den Verbrauchsmessern, deren Zählerstände an die Verwaltungsstation weitergegeben werden sollen, wobei hier zusätzlich die undirektionalen Funkverbindungen zwischen den Verbrauchsmessern und den Sammelstationen bzw. der Verwaltungsstation eingetragen sind;
- Figur 4:: ein Blockschaltbild einer Sammelstation;
- Figur 5:: ein Blockschaltbild einer aus einer Sammelstation abgeleiteten Verwaltungsstation, die zugleich einen Verbrauchsmesser umfaßt; und
- Figur 6:: eine schematische Darstellung, in welcher der Aufbau von Zeitschlitzblöcken und Zeitsegmenten dargestellt ist, wie er bei dem erfindungsgemäßen Verfahren verwendet wird.

Für die Zwecke der Erläuterung des erfindungsgemäßen Verfahrens sei ein Beispiel betrachtet, bei welchem die Zählerstände von sechs Verbrauchsmessern, die bezüglich einer Datenverwaltungsstation teilweise funktechnisch ungünstig angeordnet sind, zu einer Datenverwaltungsstation übertragen werden sollen.

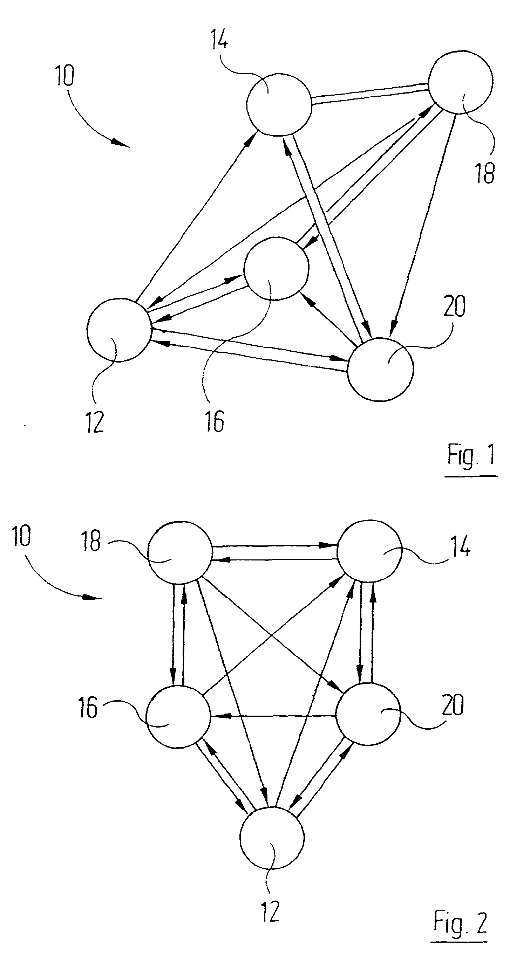

Figur 1 zeigt das hierzu verwendete Funknetz, welches insgesamt mit 10 bezeichnet ist.

Der Punkt, an welchem die gesamten Verbrauchsdaten anfallen sollen, ist eine Datenverwaltungsstation 12, die mit vier Datensammelstationen 14, 16, 18, 20 zusammenarbeitet.

In Figur 1 sind Funkverbindungen, die zwischen der Datenverwaltungsstation 12 und den Datensammelstationen 14 bis 20 sowie unter den Datensammelstationen bestehen, durch Pfeile angedeutet, wobei Doppelpfeile eine bidirektional nutzbare Funkverbindung und einfache Pfeile nur unidirektional nutzbare Funkverbindungen angeben. Die unidirektionalen Funkverbindungen werden bei dem betrachteten Ausführungsbeispiel nicht verwendet.

Figur 2 zeigt die Topologie des in Figur 1 gezeigten Funknetzes, wobei die Datenverwaltungsstation und die Datensammelstationen in unterschiedlichen hierarchischen Ebenen angeordnet sind, die durch eine Hierarchiezahl h (h = 0 ... H) gekennzeichnet sind. Diese Zahl gibt an, wieviele unterschiedliche Funkverbindungen benützt werden müssen, um eine betrachtete Datensammelstation mit der Datenverwaltungsstation zu verbinden. Im vorliegenden Fall liegt h zwischen 0 (Verwaltungsstation) und 2 (Datensammelstationen 14 und 18).

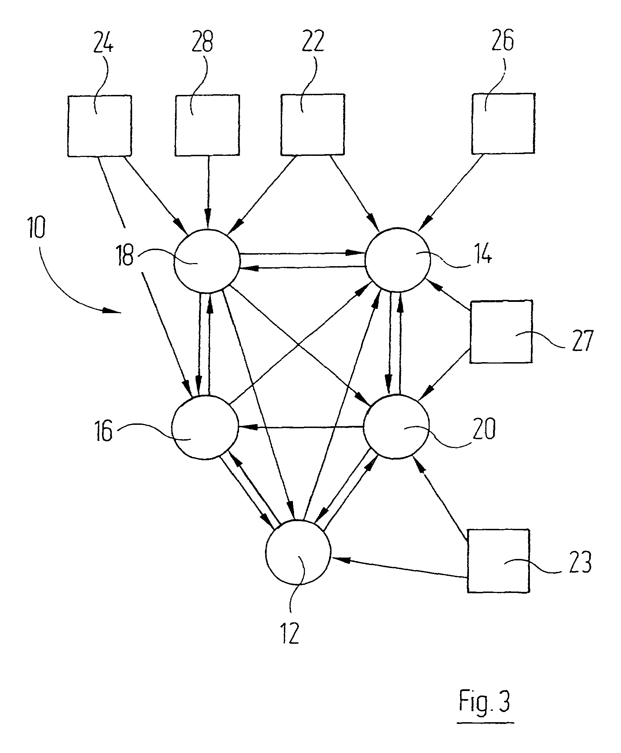

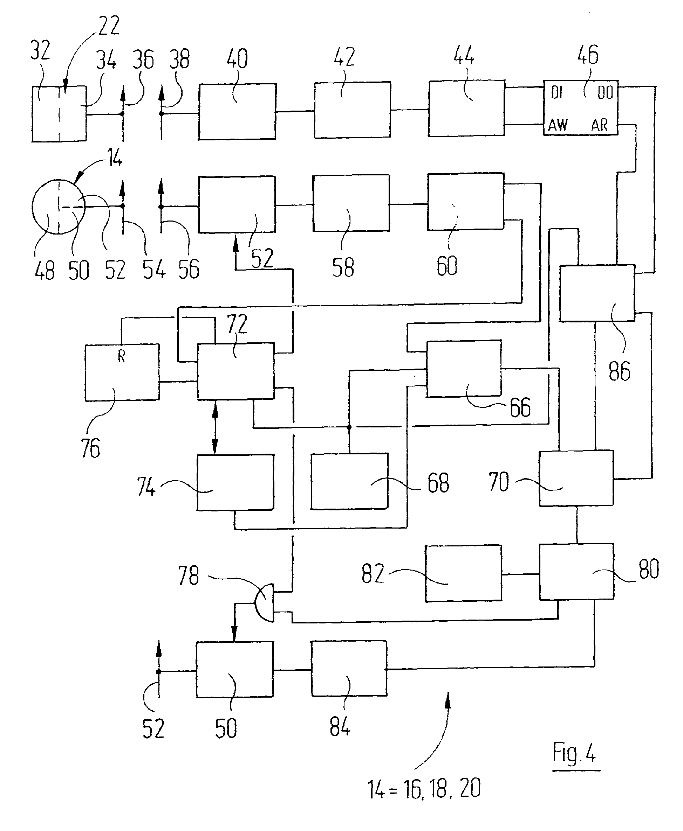

In Figur 3 ist dargestellt, wie sechs Verbrauchsmesser 22, 23, 24, 26, 27, 28 den Datensammelstationen 14, 16, 18, 20, zugeordnet sind. Die Verbrauchsmesser 22 bis 28 enthalten jeweils einen in Figur 4 schematisch dargestellten Meßteil 32 und ein Sendeteil 34, welches mit einer Antenne 36 verbunden ist. Die von der Antenne 36 ausgestrahlten Funkwellen werden von einer Antenne 38 der Datensammelstation aufgefangen, die mit einem Empfangsteil 40 der Datensammelstation verbunden sind. An deren Ausgang ist ein Signalaufbereitungskreis 42 angeschlossen, auf welchen in Signallaufrichtung ein Speichersteuerkreis 44 angeschlossen ist.

Unter den von den Verbrauchsmessern an die Datensammelstation übertragenen Daten befindet sich neben dem Zählerstand eine Identifikationsnummer für den Verbrauchsmesser, die in der Fabrik insgesamt nur einmal und für einen bestimmten Verbrauchsmesser vergeben wird.

Der Speichersteuerkreis 44 kann aus dem auf ihn gegebenen Signal somit erkennen, von welchem mehrerer mit der betrachteten Datensammelstation in Verbindung stehender Verbrauchsmesser das gerade einlaufende Signal stammt und adressiert gemäß der Verbrauchsmesser-Identifizierungsnummer einen Speicher 46, in welchem dann der Zählerstand des betrachteten Verbrauchsmessers abgelegt wird. Die Dateneingangsklemme des Speichers 46 ist mit DI, die Adressklemme für das Einlesen mit AW bezeichnet. Entsprechend hat der Speicher 46 eine Datenausgangsklemme DO sowie eine Klemme zum Adressieren des Speichers für das Auslesen AR.

Ähnlich haben die Sammelstationen jeweils eine Arbeitseinheit 48 zum Durchführen verschiedener Steuerfunktionen und logischer Arbeiten, eine Sendeeinheit 50 sowie eine Empfangseinheit 52. Letztere sind mit Antennen 54 bzw. 56 verbunden, die in der Praxis auch durch eine einzige Antenne und ggf. eine Sende/Empfangsweiche ersetzt sein können.

An den Ausgang der Empfangseinheit 52 ist ein Signalaufbereitungskreis 58 angeschlossen, dessen Ausgang mit dem Eingang eines Weichenkreises 60 verbunden ist.

Die von einer Sammelstation abgegebenen Datenpakete enthalten einen Nutzteil, der die Identifizierungsnummern und die Zählerstände eines oder einer Mehrzahl von Verbrauchsmessern enthält, die entweder direkt an eine Datensammelstation angeschlossen sind oder die ihre Daten an eine betrachtete Datensammelstation über eine andere Datensammelstation übertragen haben. Zusätzlich zu diesem Nutzteil enthalten die von den Sammelstationen und auch von der Verwaltungsstation abgegebenen Datenpakete ein Kopfteil, welches eindeutig angibt, von welcher der Sammelstationen bzw. der Verwaltungsstationen das Datenpaket stammt, ob es sich bei dem Datenpaket um ein in Aufwärtsrichtung, in höhere Hierarchieebenen zu übertragendes Datenpaket oder eine in Abwärtsrichtung, in Richtung auf die Datenverwaltungsstation zu übertragendes Datenpaket handelt, und ferner, ob es sich um ein Datenpaket handelt, das der Organisation des Funknetzes dient, oder um ein einfach nur zu übertragendes Verbrauchs-Datenpaket handelt.

Wie noch näher beschrieben werden wird, kennt jede Datensammelstation ihre Hierarchiezahl. Wenn nun der Weichenkreis 60 erkennt, daß die einlaufenden Daten von der Datenverwaltungsstation oder einer Datensammelstation geringerer Hierarchiezahl stammt, so weiß sie, daß es sich bei den einlaufenden Daten nicht um Verbrauchsdaten handelt sondern um solche Daten, die zur internen Organisation des Funknetzes benötigte Befehle oder andere von den Datensammelstationen zu beachtende Gegebenheiten handelt. Zusätzlich kann man dem Kopfteil solche Datenpakete, die zur Steuerung der Arbeitsweise des Funknetzes dienen, Befehlscodes zugeben, die z.B. ein in der sonstigen Datenübertragung nicht verwendetes ASCII-Zeichen umfassen.

Auf Grund dieses Aufbaus der Datenpakete kann somit der Weichenkreis 60 zwischen Meßdaten und Steuerungs- oder Organisationsdaten unterscheiden.

Liegen Meßdaten vor, so gibt der Weichenkreis 60 das Datenpaket auf den einen Eingang eines Umpackkreises 66, der an seinem anderen Eingang mit einem Festwertspeicher 68 verbunden ist. Dieser enthält die Kennung für die betrachtete Datensammelstation. Der Umpackkreis 66 setzt dann den Nutzteil des eingelaufenen Datenpaketes mit einem neuen Kopfteil zusammen, welches die Kennung der betrachteten Datensammelstation enthält. Das Ausgangssignal des Umpackkreises wird auf den einen Eingang eines Auswahlkreises 70 gegeben, der weiter unten genauer beschrieben wird.

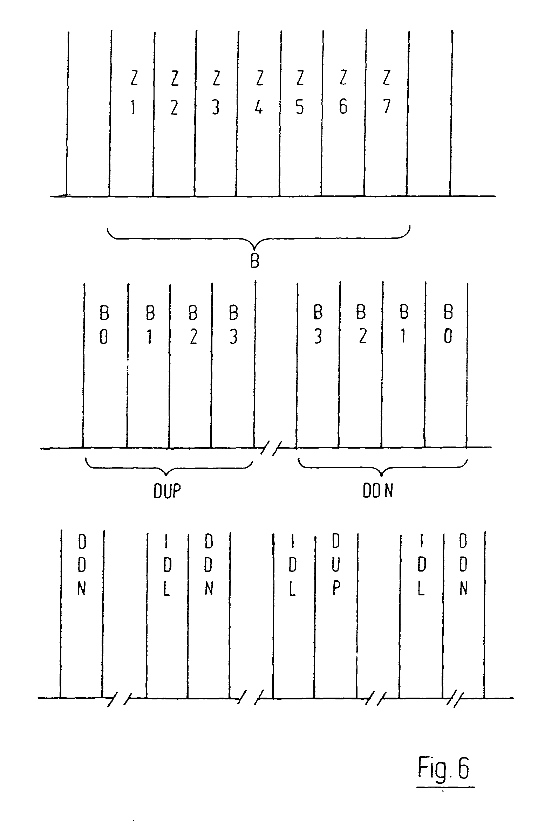

Stellt der Weichenkreis 60 fest, daß gemäß Kopfteil des eingelaufenen Datenpaketes Steuerdaten vorliegen, so gibt sie diese auf den einen Eingang eines Steuerrechners 72. Dieser arbeitet mit einem Schreib/Lesespeicher 74 zusammen. In diesem Speicher liegen u.a. Daten, die im einzelnen angeben, zu welchen Zeitpunkten die verschiedenen Sammelstationen des Funknetzes senden und empfangen dürfen. Wie dies im einzelnen erfolgt, wird später unter Bezugnahme auf Figur 6 noch genauer erläutert.

Der Weichenkreis 60 schickt in jedem Falle die Kopfteile der einlaufenden Datenpakete auf den Steuerrechner 72. Ist in dem Kopfteil neben der Kennung der Datensammelstation, welche das Datenpaket geschickt hat, zusätzlich noch ein Befehl enthalten, wird dieser Befehl vom Steuerrechner 72 ausgeführt, insbesondere werden dann im Nutzteil des Datenpaketes enthaltene Angaben darüber, wann die einzelnen Datensammelstationen senden und empfangen dürfen, im Schreib/Lesespeicher 74 abgelegt.

Ein weiterer typischer Befehl, der sich in einem nach oben durchgereichten einlaufenden Steuerdatenpaket befinden kann, ist ein Synchronisierbefehl. Wird ein solcher vom Steuerrechner 72 festgestellt, so beaufschlagt er die Rückstellklemme R einer internen Uhr 76, deren Zeit-Grundeinheit gleich einem Zeitschlitz gewählt ist, also derjenigen Zeitspanne, innerhalb welcher der gemeinsame Funkkanal einer Datensammelstation oder der Verwaltungsstation zum Senden oder zum Empfangen zugeteilt wird.

Stellt der Steuerrechner 72 fest, daß gemäß dem Inhalt des Schreib/ Lesespeichers 74 zum gegebenen Zeitpunkt einer anderen mit ihm gemäß Netztopologie verbundene Sammelstation Daten überstellen soll, so aktiviert er über ein UND-Glied 78 die Sendeeinheit 50. Ist dagegen zum betrachteten Zeitpunkt gemäß dem Inhalt des Schreib/Lesespeichers 74 eine andere Sammelstation oder die Verwaltungsstation zum Senden berechtigt, von der von der betrachteten Sammelstation Daten gemäß der eingestellten Organisation des Funknetzes Daten übernommen werden sollen, so aktiviert der Steuerrechner 72 seine Empfangseinheit 52. Liegt keine der genannten Bedingungen vor, so bleibt in dem betrachteten Zeitschlitz sowohl die Sendeeinheit 50 als auch die Empfangseinheit 52 ausgeschaltet.

Der Auswahlkreis 70 stellt zu Beginn jeder Zeitscheibe fest, ob ein Ausgangssignal des Umpackkreises 66 vorliegt. Ist dies der Fall, gibt er dieses Signal auf einen Filterkreis 80 weiter. Dieser arbeitet mit einem Speicher 82 zusammen, in welchem das jeweils zuletzt gesendete Datenpaket gespeichert wird.

Ist das anstehende Datenpaket vom zuvor gesendeten Datenpaket verschieden, wird von einem Ausgang des Filterkreises 80 ein Aktivierungssignal auf die zweite Eingangsklemme des UND-Gliedes 78 gegeben. Gleichzeitig wird dann das einlaufende Datenpaket in den Speicher 82 geschoben und über einen zweiten Ausgang des Filterkreises 80 auf den Eingang eines Parallel/Seriell-Umsetzers 84 gegeben. Dessen Ausgang ist mit der Sendeeinheit 50 verbunden.

Stellt der Auswahlkreis 70 fest, daß an seinem ersten Eingang vom Umpackkreis 66 her kein Datenpaket ansteht, so aktiviert er einen Packkreis 86. Dieser ruft unter Adressierung des Speichers 46 die dort anstehenden Daten ab und stellt sie zu einem Nutzteil zusammen. Unter Verwendung des Inhaltes des Festwertspeichers 68 stellt der Packkreis 86 dann ein der betrachteten Sammelstation entsprechendes Kopfteil zusammen und setzt das Nutzteil und das Kopfteil zu einem Datenpaket zusammen, welches auf den zweiten Eingang des Auswahlkreises 86 gegeben wird. Vom letzteren wird es dann in gleicher Weise weitergegeben wie die vom Umpackkreis 66 erhaltenen durchlaufenden Datenpakete.

In Figur 4 ist jeweils nur ein einzelner Verbrauchsmesser und eine einzelne Sammelstation angedeutet, die von der betrachteten Sammelstation verschieden sind. Es versteht sich aus dem oben Gesagten jedoch, daß in Wirklichkeit mehrere Datensammelstationen und die Datenverwaltungsstation mit der Sammelstation über Funk gekoppelt sind, ferner mehrere Verbrauchsmesser mit der Datensammelstation gekoppelt sind.

Bei dem oben beschriebenen Ausführungsbeispiel arbeiten die Sendeteile 34 und das Empfangsteil 40 auf einem Funkkanal, der von dem zur Kommunikation unter den Datensammelstationen und der Datenverwaltungsstation verwendeten Funkkanal verschieden ist, so daß das Übernehmen von Verbrauchsdaten von den Verbrauchsmessern und das Übermitteln von Datenpaketen zwischen den Datensammelstationenen und der Datenverwaltungsstation einander nicht behindern.

Bei einem abgewandelten, in der Zeichnung nicht wiedergegebenen Ausführungsbeispiel kann man aber die Sendeteile der Verbrauchsmesser so wählen, daß diese auf der gleichen Frequenz arbeiten wie die Empfangseinheiten 52 der Sammelstationen. Logisch werden dann die Verbrauchsmesser genau so behandelt wie eine Sammelstation mit dem einzigen Unterschied, daß hier nur eine unidirektionale Datenübertragung stattfindet.

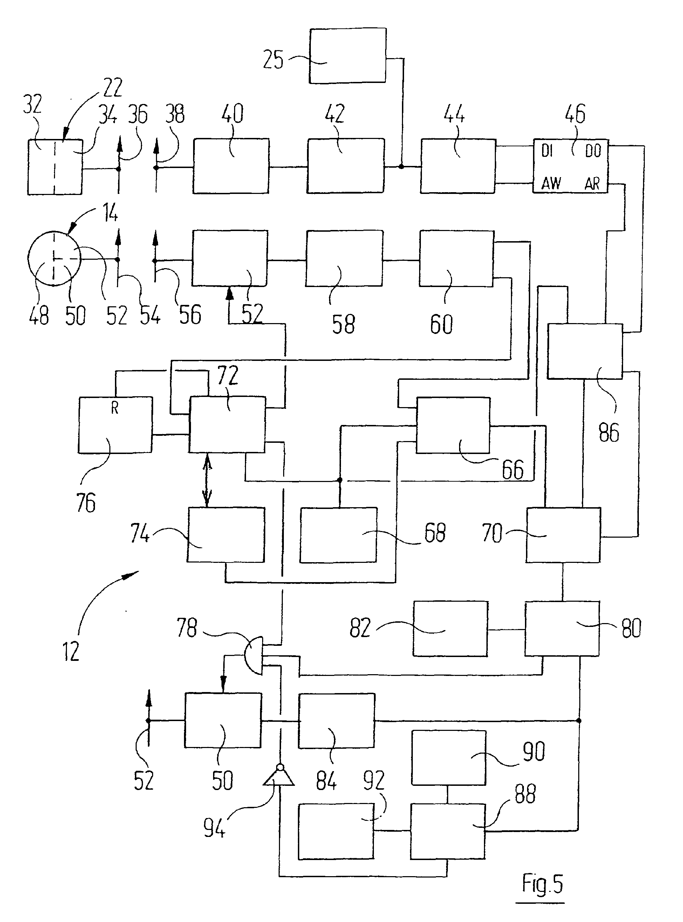

In weiterer Abwandlung der Erfindung kann man gemäß Figur 5 auch eine Station des Netzwerkes zugleich mit Meßgerätefunktion versehen. Hierzu wird der Eingang des Speichersteuerkreises 44 zusätzlich direkt mit dem Ausgang des nur ein Meßteil umfassenden weiteren Verbrauchsmessers 25 verbunden, und die von dort erhaltenen Daten werden gemäß der Nummer des entsprechenden Verbrauchsmessers vom Speichersteuerkreis 44 im Speicher 46 abgelegt.

Dabei kann man gemäß Figur 5 die Funkübertragung weiterer Verbrauchsdaten von anderen Verbrauchsmessern belassen; in weiterer Abwandlung kann man aber auch die betrachtete Station als nur mit dem einen über Leitungen angeschlossenen Verbrauchsmesser zusammenarbeitend ausbilden, d.h. die Antenne 38, das Empfangsteil 40 und den Signalaufbereitungskreis 42 weglassen.

Die oben beschriebenen Datensammelstationen können mit einigen Abwandlungen auch als Datenverwaltungsstation verwendet werden, wie in Figur 5 dargestellt.

Die vom Auswahlkreis 80 abgegebenen Datenpakete werden ständig auf einen Verwaltungsrechner 88 gegeben. Handelt es sich um Verbrauchsdaten-Datenpakete werden diese ggf. nach Bearbeitung (z.B. Entfernen der Kopfteile) in einem Massenspeicher 90, z.B. einer Festplatte, abgelegt. In größeren zeitlichen Abständen, etwa halbjährlich, werden die gesamten aufgelaufenen Daten (oder falls gewünscht auch nur die jüngsten Zählerstände) über ein Modem 92 an eine Ablesezentrale übermittelt, die die Verbrauchsabrechnung gegenüber den Abnehmern vornimmt. Das Modem 92 kann ein hochwertiges Funkmodem oder eine auf eine Datenleitung (z.B. Telefonleitung) arbeitendes Modem sein.

Um die Datenübertragung an den Verwaltungsrechner ohne größere Eingriffe in den restlichen mit den Datensammelstationen gleichen Aufbau der Station zu vermeiden, kann man logisch für die Datenverwaltungsstation den Verwaltungsrechner als Station mit nochmals niederer Hierarchienummer behandeln. Der Verwaltungsrechner 88 erzeugt dann einfach ein Blockiersignal, wenn er Verbrauchsdaten-Datenpakete empfängt. Dieses wird über einen Inverter 94 auf einen dritten Eingang des UND-Gliedes 78 gegeben, so daß die Sendeinheit 50 bei der Abwärts-Übertragung zum Verwaltungsrechner 88 gesperrt bleibt.

Der Verwaltungsrechner 88 erledigt auch die Konfigurierung des Netzes (Zeitschlitzzuteilung). Die von ihm erzeugten Steuer- oder Organisations-Datenpakete werden auf den Eingang des Parallel/Seriell-Umsetzers 84 gegeben und können so in Aufwärtsrichtung gesendet werden, nachdem der Verwaltungsrechner bei Bereitstellung eines solchen Datenpaketes kein Blockiersignal bereitstellt.

Nunmehr wird bezugnehmend auf Figur 6 der Datenfluß zwischen den einzelnen Datensammelstationen und der Verwaltungsstation beschrieben.

Für die Zwecke der Datenübertragung wird die Zeit in einzelne Zeitschlitze unterteilt. In jedem dieser Zeitschlitze darf eine einzige der Datensammelstationen oder die Datenverwaltungsstation senden oder empfangen. Bei insgesamt 5 Stationen benötigt man somit fünf Zeitschlitze, die in der oberen Teilfigur von Figur 6 mit Z1 bis Z5 bezeichnet sind. Ferner sind zwei Zeitschlitze Z6 und Z7 vorgesehen, die als Reserve dienen.

Die Zeitschlitze Z1 bis Z7 bilden zusammen einen Zeitschlitzblock B.

Wie oben dargelegt, hat das hier betrachtete Funknetzwerk Stationen mit Hierarchienummern h von 0 bis 2. Die entsprechenden Sendeaktivitäten und Empfangsaktivitäten, die wieder zeitlich gegen Überlappung gesichert sein müssen, werden in Zeitschlitzblöcken B0, B1 und B2 abgewickelt. Ferner wird noch ein Zeitschlitzblock B3 als Reserve vorgesehen.

In einem Aufwärts-Übertragungsmodus, in welchem Daten von unteren Hierarchieebenen zu höheren weitergegeben werden, folgen die Zeitschlitzblöcke B0, B1, B2, B3 aufeinander und bilden zusammen ein Zeitsegment DUP.
Bei einer Abwärts-Datenübertragung folgen die Zeitschlitzblöcke B3, B2, B1 und B0 in dieser Reihenfolge aufeinander und bilden ein Zeitsegment DDN.

Die Zeitsegmente DDN dienen bei der hier betrachteten Anlage zur Erfassung der Zählerstände von Verbrauchsmessern in der Regel als solche Zeitsegmente, in denen Zählerstände in Richtung auf die Datenverwaltungsstation 12 weitergereicht werden. Derartige Zeitsegmente können aber auch - entsprechend markiert - Nachrichten und Fehlermeldungen von den oberen Hierarchieebenen in untere Hierarchieebenen weitergeben.

Die Aufwärts-Zeitsegmente DUP sind in der Regel solche, in denen Steuer- oder Organisationsdaten von der Datenverwaltungsstation an die Sammelstationen weitergegeben werden. Es handelt sich hierbei insbesondere um Informationen darüber, zu welchen Zeitpunkten die einzelnen Datensammelstationen und die Datenverwaltungsstation für ein Senden oder Empfangen einen Zeitschlitz zugeteilt bekommen haben.

In der Praxis können die Zeitsegmente dicht aufeinander folgen, vorzugsweise werden jedoch zwischen die einzelnen Zeitsegmente Pausen stochastischer Dauer eingefügt, wie dies im einzelnen in der DE 198 24 471 A1 beschrieben ist.

Typischerweise hat man dann eine Abfolge von Zeitsegmenten, wie sie im unteren Teildiagramm von Figur 6 wiedergegeben ist. Man erkennt dort Zeitsegmente DDN, in denen Meßdaten in Abwärtsrichtung der Hierarchie zur Datenverwaltungsstation bewegt werden, Zeitsegmente IDL, in denen im Funknetz keinerlei Datenübertragung stattfindet und Zeitsegmente DUP, in denen Steuerbefehle und/oder Organisationsdaten von der Datenverwaltungsstation nach oben zu den Datensammelstationen durchgeschoben werden, wobei sich im Kopfteil der entsprechenden Datenpakete auch ein Steuerbefehl zur Synchronisierung der internen Uhren der Datensammelstationen befinden kann.

Zwischen diesen Zeitsegmenten liegen, wie durch Unterbrechung der Zeitachse angedeutet, Pausen stochastischer Länge, die dadurch erzeugt werden, daß man die interne Zeit der Datenverwaltungsstation und der Datensammelstationen unter Verwendung eines Algorhythmus manipuliert, der den verschiedenen Stationen des Funknetzes gleichermaßen bekannt ist, z.B. in Steuerz-Zeitsegmenten DUP mit von der Verwaltungsstation nach oben geschoben wird.

Unter den Steuerdaten der Steuer-Zeitsegmente DUP können auch solche sein, die den Datensammelstationen befehlen, den jeweils zum Empfang und zum Senden verwendeten Funkkanal zu wechseln. Durch einen solchen Wechsel des Funkkanales wird die Störsicherheit des Funk-Datenübertragungsnetzes verbessert.

Für das in den Figuren 1 und 2 gezeigte Funknetz mit fünf Stationen (Datenverwaltungsstation und vier Datensammelstationen) wird jeder Station ein Zeitschlitz gleicher Nummer zugeteilt. Damit hat man dann folgende Verhältnisse:

**Tabelle 1: Topologie des Funknetzes**

| Stationsnummer | Zeitschlitz | Hierarchie |
|---|---|---|
| 1 | 1 | 0 |
| 2 | 2 | 2 |
| 3 | 3 | 1 |
| 4 | 4 | 2 |
| 5 | 5 | 1 |

Aus den Figuren 1 und 2 gehen folgende Empfangsverbindungen hervor:

**Tabelle 2: Empfangsverhältnisse**

| Stationsnummer | empfangene Stationen |
|---|---|
| 1 | 3, 4, 5 |
| 2 | 1, 3, 4, 5 |
| 3 | 1, 4, 5 |
| 4 | 2, 3 |
| 5 | 1, 2, 4 |

Bei dem betrachteten Ausführungsbeispiel hat man beim Übertragen von Datenpaketen in Aufwärtsrichtung (darunter insbesondere auch die Steuerdatenpakete und die Synchronisationsdatenpakete) folgende Zeitschlitze für Empfang (Anzahl der Zeitschlitze pro Zeitschlitzblock = 7).

Anstelle einer Absolut-Zeitschlitznummer in einem Zeitsegment wird nachstehend auch eine indizierte Schlitznummer verwendet, die die Hierarchienummer B des Zeitschlitzblockes und die Zeitschlitznummer im Zeitschlitzblock angibt. Diese sind bei der gegebenen Zeitschlitzzahl pro Zeitschlitzblock leicht in einander umrechenbar.

**Tabelle 3: Empfangszeitschlitze bei Aufwärtsübertragung**

| Stations-Nr. | B | Z | absol. Zeitschlitznr. |
|---|---|---|---|
| 1 | (entfällt: die Datenverwaltungsstation erzeugt die Aufwärtsdaten, empfängt keine solchen) | | |
| 2 | 1 | 3 | 10 |
| 3 | 0 | 1 | 1 |
| 4 | 1 | 3 | 10 |
| 5 | 0 | 1 | 1 |

Man erkennt, daß man diejenigen Zeitschlitze, die dadurch frei werden, daß man zwei oder mehr Stationen gleicher Hierarchienummer auf einen gemeinsamen Zeitschlitz legt, als Reserve-Zeitschlitz verwenden kann.

Der Sendezeitpunkt der verschiedenen Stationen bei Aufwärts-datenübertragung sind wie folgt:

**Tabelle 4: Sendezeitschlitze bei Aufwärtsübertragung**

| Stations-Nr. | B | Z | absol. Zeitschlitznr. |
|---|---|---|---|
| 1 | 0 | 1 | 1 |
| 2 | 2 | 2 | 16 |
| 3 | 1 | 3 | 10 |
| 4 | 2 | 4 | 18 |
| 5 | 1 | 5 | 12 |

Die Empfangsschlitze bei Abwärts-Datenübertragung sind

**Tabelle 5: Empfangszeitschlitze bei Abwärtsübertragung**

| Stations-Nr. | B | Z | absol. Zeitschlitznr. |
|---|---|---|---|
| 1 | 8 | 3 | 59 |
| 2 (entfällt, da keine Netzebene mit Hierarchienummer 3) | | | |
| 3 | 7 | 4 | 53 |
| 4 (entfällt, da keine Netzebene mit Hierarchienummer 3) | | | |
| 5 | 7 | 2 | 51 |

Die Sendeschlitze für Abwärts-Datenübertragung sind:

**Tabelle 6: Sendeschlitze für Abwärts-Datenübertragung**

| Stations-Nr. | B | Z | absol. Zeitschlitznr. |
|---|---|---|---|
| 1 (entfällt, da keine darunterliegende Netzwerksebene) | | | |
| 2 | 7 | 2 | 51 |
| 3 | 8 | 3 | 59 |
| 4 | 7 | 4 | 53 |
| 5 | 8 | 5 | 61 |

Nachstehend sei ein Beispiel für eine Aufwärts-Datenübertragung näher beschrieben. Es kann sich dabei z.B. um eine Datenübertragung handeln, welche die Datenverwaltungsstation bei der ersten Inbetriebnahme des Netzes und insbesondere vor Durchführung einer von ihr initiierten Ablesung handeln, die dazu dient, die gesamte Netzwerktopologie neu zu analysieren und zu optimieren.

Hierzu übermittelt die Datenverwaltungsstation 12 ein Synchronisationstelegramm in einem Aufwärts-Datenpaket DUP. Dieses enthält u.a. die Hierarchienummer der verschiedenen Datensammelstationen und die Liste der zuletzt von der Datenverwaltungsstation empfangenen Datensammelstationen. Alle diese Botschaft empfangenden Datensammelstationen, die in der Liste enthalten sind, definieren sich dann jeweils als zur Hierarchie der sendenden Datensammelstation bzw. der Datenverwaltungsstation nächsthöheren Hierarchienummer zugehörig.

Die nachstehende Tabelle 7 zeigt die Weitergabe des Aufwärts-Datenpaketes und gibt an, in welchen Zeitschlitzblöcken und welchen Zeitschlitzen die Datenübertragung erfolgt. Jede Datensammelstation kennt nach Empfang eines Aufwärts-Synchronisierdatenpaketes, in dessen Liste sie vorkommt, ihre Hierarchie. Sie kann dann jeweils alle Aufwärts-Empfangsfenster bis zum nächsten Synchronisations-Datenpaket (z .B. nach 15 Zeitsegmenten) schließen und braucht nur noch im nächsten Zeitschlitzblock das Aufwärts-Datenpaket mit ihrer Nachbarliste und ihrer Hierarchienummer weiterzugeben.

**Tabelle 7: Topologie-Analyse**

| Block | Zeit-Schlitz | Station | Hierarchie | Liste von | Empf. von | Empf.-Fenster | Bem. |
|---|---|---|---|---|---|---|---|
| 1 | 1 | 1 | 0 | 3,4,5 | 2,3,5 | 2,3,4,5 | |
| 1 | 2 | | | | | | |
| 1 | 3 | | | | | | |
| 1 | 4 | | | | | | |
| 1 | 5 | | | | | | |
| 2 | 1 | | | | | | |
| 2 | 2 | | | | | 4 | (*) |
| 2 | 3 | 3 | 1 | 1,4,5 | (1),2,4 | 2,4 | (**) |
| 2 | 4 | | | | | | |
| 2 | 5 | 5 | 1 | 1,2,4 | 1,2,(3) | 4 | (***) |
| 3 | 1 | | | | | | |
| 3 | 2 | 2 | 2 | 1,3,4,5 | 4,(5) | | |
| 3 | 3 | | | | | | |
| 3 | 4 | 4 | 2 | 2,3 | (1), (2), | | |
| | | | | | (3), (5) | | |
| | 5 | | | | | | |
| 4 | 1 | | | | | | |
| 4 | 2 | | | | | | |
| 4 | 3 | | | | | | |
| 4 | 4 | | | | | | |
| 4 | 5 | | | | | | |

| | | | | | | | |
|---|---|---|---|---|---|---|---|
| (*) = nicht in Liste (**) = 1 kein Empfang mehr; nicht empfangen (***) = 3 kein Empfang mehr | | | | | | | |

Insgesamt hat jede Station einmal gesendet.Folgende Empfangszeitschlitze waren offen:

**Tabelle 8: Offene Empfangszeitschlitze**

| Stations-Nr. | Empfangszeitschlitznr. |
|---|---|
| 1 | keiner |
| 2 | 2 (Block 3) |
| 3 | 1 (Block 2) |
| 4 | 4 (Block 3) |
| 5 | 5 (Block 2) |

Aus der obigen Tabelle 4 ergibt sich ferner, daß jede Station einmal empfangen gesendet hat hat.

Nunmehr soll unter Bezugnahme auf Figur 3 ein Beispiel für eine Abwärts-Datenübertragung im Funknetz besprochen werden. Das Funknetz selbst hat die in Figur 2 gezeigte Topologie, die Verbrauchsmesser 22 bis 28 sind mit dem Funknetz über einen gesonderten ihnen gemeinsamen Funkkanal gekoppelt, wie oben schon beschrieben. Sie übertragen ihre Daten unidirektional an die verschiedenen Datensammelstationen.

Wenn nun von der Datenverwaltungsstation 12 ein Einlesen der Zählerstände der Verbrauchszähler 22, 23 und 25 bis 28 vorgenommen werden soll, so stellt die Datenverwaltungseinheit 12 zunächst fest, daß ihr der Zählerstand des Verbrauchsmessers 23 schon durch Direktempfang bekannt ist. Die Datenverwaltungsstation schickt daher angehängt an einen Synchronisierbefehl die Anforderungsliste 22, 0, 26, 27, 28 auf den Weg. Hierbei wird die nicht angeforderte Datensammelstation als Leernummer mit aufgeführt, um die Länge des Datenpaketes und dessen Verarbeitung in den verschiedenen Datensammelstationen unabhängig davon zu halten, wieviele Verbrauchsmesser schon in einer Hierarchieebene abgelesen werden konnten, die der Hierarchieebene einer betrachteten Sammelstation vorgeschaltet sind. Schrittweise reduziert sich dann die Anforderungsliste wie folgt:

| Block | Hierarchie | sendende Station | Anforderungsliste |
|---|---|---|---|
| 1 | 0 | 1 | 22,0,26,27,28 |
| 2 | 1 | 5 | 22,0,26,0,28 |
| | | | (27 schon bekannt) |
| 3 | 2 | 2 | 0,0,0,0,28 |
| | | | (22 u. 26 schon bek.) |
| 3 | 2 | 4 | 0,0,26,0,0 (22 und 28 schon bekannt) |
| 4 | 3 | | |

Man kann nun zur Reduktion der Anzahl der insgesamt zu öffnenden Empfangszeitschlitze für eine sich anschließende Abwärts-Datenübertragung vorab eine Abwärts-Aktivierungsliste erstellen, die dann folgendermaßen aussieht:

| Block | Hierarchie | Station | Verbrauchsmesser |
|---|---|---|---|
| 5 | 4 | | |
| 6 | 3 | | |
| 7 | 2 | 2 | 22,0,26,0,0 (11 und 15 nicht angefordert) |
| 7 | 2 | 4 | 22,0,0,0,28 (14 und 15 nicht vorhanden) |
| 8 | 1 | 3 | 22,0,0,0,28 (22 und 28 von Ebene 2) |
| 8 | 1 | 5 | 22,0,26,27,0 (27 direkt, 22 und 26 von oben) |

Bei der dann anschließend durchgeführten Abwärts-Datenübertragung der Zählerstände sind dann nur noch folgende Empfangszeitschlitzfenster zu öffnen:
Datenübertragung für Verbrauchsmesser 22:
   Zeitschlitzblock 11: Station 3, Zeitschlitz 4; Station 5, Zeitschlitz 2.
   Zeitschlitzblock 12: Station 1, Zeitschlitz 2 (Reserve: Zeitschlitz 4).

Für eine Abwärtsübertragung des Verbrauchsmesser 16 sind die Zeitschlitze 13 bis 16 vorgesehen. Innerhalb dieser zeitschlitze wird aber keine Empfangseinheit aktiviert, da der Zählerstand vom Verbrauchsmesser 16 direkt der Datenverwaltungsstation 12 übermittelt wird.

Das Abwärtssegment für die Übermittlung des Zählerstandes des Verbrauchsmessers 26 ist wie folgt:
Zeitschlitzblock 19: Station 5, Zeitschlitz 2.
Zeitschlitzblock 20: Station 1, Zeitschlitz 5.

Das Abwärtsübertragungs-Zeitsegment für den Verbrauchsmesser 27 ist wie folgt:
Zeitschlitzblock 24: Station 1, Zeitschlitz 5.

Das Abwärtsübertragungs-Zeitsegment für den Verbrauchsmesser 28 ist:
Zeitschlitzblock 27: Station 3, Zeitschlitz 4
Zeitschlitzblock 28: Station 1, Zeitschlitz 3.

Bei dem oben beschriebenen einfachen und überschaubaren Beispiel ist die Einsparung an zu öffnenden Empfangszeitschlitzen gegenüber demjenigen Fall, in dem keine vorherige Analyse der Abwärtsdatenübertragung erfolgt, zahlenmäßig nicht sehr groß. Deutliche Verbesserungen ergeben sich aber bei der für die Batterieauslegung wesentlichen worst case-Situation, bei der eine Station sehr viele Nachbarn haben kann, für welche sie ohne eine Voranalyse stets alle verfügbaren Empfangszeitschlitze öffnen müßte.

Allgemein gilt für die Auslegung eines Funknetzes zum Auslesen einer Vielzahl von Verbrauchsmessern, das obenstehend nur anhand eines einfachen und übersichtlichen Ausführungsbeispieles beschrieben wurde, Folgendes:

Dadurch, daß die einzelnen Datensammelstationen unter einander und zur Datenverwaltungsstation synchronisiert sind, kann man kontrollierte kurze Empfangszeitfenster verwenden, die sonst wegen der Toleranzen der internen Uhren von Datenverwaltungsstationen und Datensammelstationen (Quarztoleranzen) nicht möglich wären.

Jeder Station wird bei der Fertigung, Montage oder Inbetriebnahme eine fortlaufende Nummer im Bereich zwischen 1 und N und damit ein zyklischer Zeitschlitz in einem Zeitschlitzblock zugeteilt, wobei die Länge eines Zeitschlitzes beispielsweise jeweils 1/16 s betragen kann.
Am einfachsten werden die Zeitschlitze direkt nach der Stationsnummer vergeben.

Dabei erhält dann die Datenverwaltungsstation zweckmäßig die Nummer 1 und damit auch den ersten Zeitschlitz in einem Zeitschlitzblock.

N sei die Maximalzahl der Stationen des Funknetzwerkes (z.B. 30). Hinzu kommen dann noch zwei Reserve-Zeitschlitze für andere Funktionen. Die (N + 2) Zeitschlitze aller Datensammelstationen und der Datenverwaltungseinheit bilden einen Zeitschlitzblock.

Grundsätzlich darf die Datenverwaltungsstation und jede Datensammelstation nur in ihrem Zeitschlitz senden. Dadurch ist die Kommunikation stets frei von Kollisionen zwischen den Stationen (Datensammelstationen und Datenverwaltungsstation).

Die Synchronisation wird durch regelmäßige Synchronisationstelegramme aufrechterhalten, die die Datenverwaltungseinheit in festen Zeitabständen von beispielsweise jeweils etwa 15 Minuten in einem Synchronisier-Aufwärts-datenpaket bewerkstelligt.

Das oben beispielhaft beschriebene Funkübertragungsverfahren zwischen Stationen unterschiedlicher Hierarchienummer stellt nun einerseits sicher, daß die Daten aller Verbrauchsmesser, die in einer oder in mehreren der Datenverwaltungsstationen gespeichert sind, bei beliebiger Funktopologie und auch bei gelegentlichen Fremdstörungen sicher zur Datenverwaltungsstation gelangen. Dabei werden stromfressende unnötige Sendevorgänge und vor allem unnötige stromfressende Empfangsvorgänge verhindert, indem nach Analyse der Funkverhältnisse die zu öffnenden Sendezeitschlitze und Empfangszeitschlitze für jede Station genau vorgegeben werden.

Aus Gründen der Stromersparnis wird jede Kommunikation als unquittierte broadcast-Botschaft versandt, die jeweils eine oder mehrere Nachbarstationen erreicht. Je nach der zuvor vorgenommenen Zeitschlitzprogrammierung kann eine von einer broadcast-Botschaft erreichte Station diese Botschaft ignorieren, sie empfangen, sie verarbeiten und speichern oder sie zu einer neuen auszusendenden broadcast-Botschaft verarbeiten, die dann jeweils im nächsten Zeitschlitzblock im der jeweiligen Station zugeordneten Sendezeitschlitz gesendet wird.

Jede Station erhält dynamisch eine Hierarchie-Nummer h zugeordnet. h gibt die Mindestzahl der Funkübertragungen an, die erforderlich sind, damit entweder eine Botschaft der Datenverwaltungsstation die jeweilige Station erreichen kann oder damit umgekehrt eine Botschaft einer Datensammelstation die Datenverwaltungsstation erreichen kann. Datensammelstationen, die mit der Datenverwaltungsstation direkt bidirektional kommunizieren können, haben die Hierarchienummer h = 1. Datensammelstationen, die nicht direkt mit der Datenverwaltungsstation kommunizieren können, vielmehr nur indirekt über mindestens eine Datensammelstation mit h = 1 mit der Datenverwaltungsstation kommunizieren können, erhalten die Hierarchienummer h = 2 usw.

Jedes Funknetzwerk hat eine maximale topologische Tiefe und damit eine maximale Hierarchie-Nummer H. Bei beliebigen Funknetzwerken kann H höchstens = N - 1 sein (jede Hierarchieebene enthält nur eine Station; das Netzwerk bildet eine lineare Kette).

Zur Vereinfachung werden nur bidirektionale Funkverbindungen bei der Betrachtung der Netztopologie berücksichtigt. Zwar können bei assymetrischen Sende-Leistungen und/oder Empfangsempfindlichkeiten auch unidirektionale Verbindungen im Funknetz gegeben sein, diese sind dann aber (es sei denn, Empfänger oder Sender einer Station wären defekt) stets in der Nähe der Empfindlichkeitsgrenze der Funkverbindung. Damit sind derartige Funkverbindungen unsicher und leicht störbar, so daß man auf solche nur unidirektionalen Verbindungen im Hinblick auf eine Vereinfachung des topologischen Netzwerkes in der Regel verzichten wird.

Bei dem Datenübertragungsverfahren, welches Gegenstand der vorliegenden Anmeldung ist, bilden die jeweils (N + 2) regelmäßigen Sendezeitschlitze der Datenverwaltungseinheit und diejenigen der (N - 1) Datensammelstationen einen Zeitschlitzblock und die verschiedenen Zeitschlitzblöcke können sich direkt (ohne Zwischenpausen) aneinander anschließen oder es können zwischen aufeinander folgenden Zeitschlitzblöcken oder zwischen Gruppen aufeinander folgenden Zeitschlitzblöcken Zwischenpausen mit variabler Länge vorgesehen werden.

In jedem Zeitschlitzblock kann eine Datenübertragung von einer Hierarchieebene des Funknetzwerkes zu einer benachbarten Hierarchieebene erfolgen, und zwar in Aufwärtsrichtung oder in Abwärtsrichtung. Bei der Datenübertragung in Aufwärtsrichtung werden zunächst Daten von der Datenverwaltungsstation 12 an diejenigen Datensammelstationen übermittelt, die die Hierarchienummer h = 1 haben. Dann erfolgt die Datenübertragung von h = 1 bis h = 2 usw. bis hin zu H = (N - 1), soweit die höheren Hierarchieebenen auf Grund der gegebenen Funktopologie überhaupt von Interesse sind.

Die Gesamtheit der zur Datenübertragung von der untersten Hierarchieebene h = 0 bis zur höchsten jeweils benötigten Hierarchieebene benötigten Zeitschlitzblöcke sowie ein Reserve-Zeitschlitzblock für andere Funktionen werden zu einem Zeitsegment zusammengefaßt.

Ein Zeitsegment besteht somit aus einer Folge von Zeitschlitzblöcken, die unterschiedlichen Hierarchienummern zugeordnet sind (sowie dem Reserve-Zeitschlitzblock), und jeder der Zeitschlitzblöcke umfaßt (N + 2) Zeitschlitze.

Ein Zeitsegment hat somit bei einem rein linearen Funknetz, bei welchem auf jeder Hierarchieebene genau eine Station vorgesehen ist, eine Dauer von (N + 2) = x (N - 1 + 1) Zeitschlitzen. Ist N = 30 und die Länge eines Zeitschlitzes 1/16 s so ergibt sich eine Länge des Zeitsegmentes von 60 s, also einer Minute.

Um bei mehreren unabhängigen Funknetzwerken, die den gleichen Funkkanal nutzen, Dauerkollisionen zu vermeiden, werden nach den einzelnen Zeitsegmenten pseudostochastische Pausen eingefügt, deren Länge zwischen beispielsweise 1 und 256 Zeitschlitzen schwanken kann. Zur Erzeugung dieser Pausen wird ein Pausenzeitalgorythmus verwendet, der für jedes Funknetzwerk anders gewählt ist. Dieser Algorythmus ist der Datenverwaltungsstation und den Datensammelstationen jeweils bekannt. Es kann ausreichen, diesen Algorythmus nur der Datenverwaltungsstation von außen zuzuteilen. Die Datenverwaltungsstation kann den Algorythmus in einem Aufwärts-Datenpaket den zugehörigen Datensammelstationen mitteilen.

Ebenfalls zur Reduktion von Kollisionen zwischen räumlich benachbarten Funknetzwerken kann man vorsehen, daß man in jedem Zeitsegment den Funkkanal und/oder das Verfahren, nach welchem die zu übertragenden Daten moduliert werden (z.B. Amplitudenmodulation, Frequenzmodulation, Impulsbreitenmodulation etc.), zu ändern.

Unter den Zeitsegmenten hat es solche, in denen überhaupt keine Kommunikation im Funknetzwerk erfolgt (idle Zeitsegmente), Aufwärts-Zeitsegmente, in denen Datenpakete jeweils von einer Hierarchieebene an eine nächsthöhrere weitergegeben werden, und Abwärts-Zeitsegmente, in denen Daten von einer höheren Hierarchieebene an eine niederere Hierarchieebene übertragen werden.

Die Aufwärts-Datensegmente bestehen aus einer zur Abdeckung der Tiefe des Netzwerkes ausreichenden Anzahl von Zeitschlitzblöcken (manixal N - 1). Sie dienen in erster Linie zur Synchronisierung von Verwaltungsstation und Datensammelstationen, wobei diese Blöcke zusätzlich auch noch angehängte weitere Daten umfassen können, wie z.B. die jeweils von den Stationen zu öffnenden Sendezeitschlitze und Empfangszeitschlitze umfassen können, aber auch die Übermittlung von Zählerständen ausgewählter spezieller Verbrauchsmesser anfordern können.

Auch weitere Arbeiten, die von bestimmten Sammelstationen durchgeführt werden sollen, (z.B. Rückmeldungen über den Ladezustand der Batterien usw.) können auf diese Weise angefordert werden. Wird nichts anderes festgelegt, so handelt es sich bei den Zeitsegmenten um idle-Zeitsegmente.

Jedes K-te Zeitsegment, (z.B. jedes 15. Zeitsegment) ist ein Aufwärts-Datensegment, welches die Datenverwaltungsstation u.a. zur Zeit-Synchronisation der Datensammelstation verwendet. Es enthält in erster Linie einen Synchronisations-Befehl, auf den noch zusätzliche Daten folgen können.

Im ersten Zeitschlitzblock eines Aufwärts-Zeitsegmentes sendet die Datenverwaltungsstation ihr Aufwärts-Datenpaket. Die Datensammelstationen mit h = 1 empfangen dieses Datenpaket im folgenden Zeitschlitzblock (jede Datensammelstation in ihrem Empfangszeitschlitz) und geben es im folgenden Zeitschlitzblock (jede Datensammelstation wiederum in ihrem Zeitschlitz) an die Datensammelstationen mit h = 2 weiter. Dies wiederholt sich bis die Datensammelstationen der letzten verwendeten Hierarchieebene erreicht sind (bis maximal H = N - 1).

Jede Datensammelstation öffnet somit im Zeitschlitzblock H - 1 des K-tens Zeitsegmentes mindestens einen Empfangsschlitz zu einer Station der nächstniedrigeren Hierarchieebene (bei h = 1 im der Datenverwaltungsstation zugeordneten Zeitschlitz des ersten Zeitschlitzblocks).

In den höheren Hierarchieebenen der Aufwärts-Datenübertragung kann es im Gegensatz zur Hierarchieebene 1 auch mehrere Stationen mit h - 1 geben, von denen eine betrachtete Datensammelstation Aufwärts-Datenpakete und Synchronisierbefehle erhalten kann. Um Strom zu sparen und redundante Funkwege effektiv zu nutzen, kann man wie folgt vorgehen: Jede Station öffnet bei Aufwärts-Datenübertragung im entsprechenden Aufwärts-Zeitsegment mindestens einen Empfangszeitschlitz zu einer ihrer Nachbarstationen auf der nächstniedrigaeren Hierarchieebene (eine Datensammelstation, die sich auf h = 1 befindet, öffnet einen Empfangszeitschlitz entsprechend dem Zeitschlitz der Datenverwaltungsstation im ersten Zeitschlitzblock).

Trifft das in regelmäßigen Zeitabständen erwartete Synchronisations-Datenpaket in diesem erwarteten Empfangszeitschlitz nicht ein, so kann die auf den Synchronisierbefehl wartende Datensammelstation innerhalb desselben Zeitschlitzblockes eventuell noch einen weiteren Empfangszeitschlitz desselben Zeitschlitzblockes öffnen, der später liegt und ermöglicht, das Synchronisier-Datenpaket von einer anderen benachbarten Datensammelstation mit derselben Hierarchie h - 1 zu erhalten.

Liegt keine Störung vor, muß also zur Aufwärts-Datenübertragung (und damit zur Synchronisierung) jede Datensammelstation nur genau einmal einen einzigen Empfangszeitschlitz öffnen (zur Synchronisierung z.B. alle 15 Minuten). Liegt eine Störung vor und ist Redundanz gegeben, kann sie alle Alternativwege und/oder bei nur kurzzeitigen Störungen auch nur einen einzigen geringfügig späteren Empfangszeitschlitz nutzen, was nur geringen zusätzlichen Aufwand bedeutet.

Insgesamt benötigt eine Aufwärts-Datenübertragung von der Datenverwaltungsstation an alle Datensammelstationen maximal genau ein Zeitsegment. Innerhalb dieses Zeitsegmentes sendet jede der Datensammelstationen grundsätzlich genau einmal. Ist die Sendedauer dabei kleiner als 1/1000 der Länge des Zeitsegmentes (beim betrachteten Ausführungsbeispiel kleiner 60 ms), so sind die Grenzbedingungen für die Bandbelegung selbst eines 0,1%-Funkbandes automatisch erfüllt.

Gleichzeitig weiß jede Datensammelstation stets, daß sie bei Aufwärts-Datenübertragung von der Datenverwaltungseinheit her nur im Zeitschlitzblock (h - 1) empfangsbereit sein muß und im Zeitschlitzblock h in dem ihr zugeordneten Zeitschlitz senden muß. Bei Abwärts-Datenübertragung muß sie ebenfalls nur für einen Zeitschlitzblock empfangsbereit sein (den Zeitschlitzblock h + 1) und muß dann nur im folgenden Zeitschlitzblock (h) in dem ihr zugeordneten Zeitschlitz senden.

Da eine Datensammelstation die aktuelle topologische Tiefe des gesamten Funknetzwerkes nicht kennt, wird für die Datenübertragung in Abwärtsrichtung vereinbart, daß immer von der maximalen topologischen Tiefe also von H = N - 1 ausgegangen wird.

Abwärts-Zeitsegmente werden nur nach entsprechender Vorankündigung durch eine broadcast-Botschaft der Datenverwaltungsstation eingeleitet. Empfängt also eine Datensammelstation mit der Hierarchienummer H eine solche Ankündigung, so weiß sie, daß sie 2 x (N - H - 1) Zeitschlitzblöcke später eventuell Daten aus der nächstoberen Hierarchieebene erwarten muß. Weiß sie dann zusätzlich aus einem Vortest (siehe unten), von welchem der insgesamt N Datensammelstationen sie überhaupt Daten empfangen kann (ihre Funkempfangs-Nachbarn der Hierarchieebene h + 1), so reduziert sich die Zahl der zu öffnenden Empfangszeitschlitze und damit der Strombedarf weiter.

Bei der Abwärts-Datenübertragung werden also von einer oder mehreren Datensammelstationen Datenpakete in Richtung auf die Datenverwaltungsstation zu übertragen, wobei in jedem Zeitschlitzblock jeweils ein Datenpaket (ungünstigster Fall der Stationskette) bis (N - 1) Datenpakete (reine Sterntopologie) im Takt der Zeitschlitzblöcke um eine Hierarchieebene weiter abwärts gereicht werden. Stets erreichen die nach unten zu übertragenden Datenpakete im letzten Block des Abwärts-Zeitsegmentes gemeinsam die Datenverwaltungsstation.

Bei dem bisherigen Verfahren, das ohne Zeitschlitzzuteilung arbeitet, besteht bei der Abwärts-Datenübertragung noch das Problem, daß eine Station in einem Übertragungszyklus von einer Hierarchieebene zur anderen bis zu (N - 2) Datensätze von den Datensammelstationen mit h + 1 empfangen kann, während sie aber im folgenden Übertragungszyklus nur einen einzigen Datensatz weitergeben kann. Dadurch müssen die Datensammelstationen Datensätze über mehrere Übertragungszyklen zwischenpuffern können, was das Vorsehen entsprechend großer Speicher zur Folge hat und die Hardwarekosten und den Programmieraufwand erhöht. Für die Aufwärts-Datenübertragung besteht dieses Problem bei dem bekannten Verfahren nicht, da ja nur ein einziges von der Datenverwaltungsstation abgegebenes Datenpaket gleichzeitig im Netzwerk ist, auch wenn es über viele Zwischenstationen übertragen wird.

Zur Lösung dieses "Stauproblems" muß die Struktur der zu übertragenden Datensätze betrachtet werden: Zur Datenverwaltungsstation sollen ja insgesamt die Daten (Zählerstände und Identifizierungsnummern) einer Reihe von Verbrauchsmessern übertragen werden. Die Daten eines bestimmten Verbrauchsmessers können wegen der Redundanz der primären Funkverbindung von den Verbrauchszählern zu den Datensammelstationen gleichzeitig in mehreren Stationen zur Übertragung im Funknetzwerk bereitstehen. Im Prinzip könnte jede Datensammelstation einfach in jedem Abwärts-Zeitsegment in den Zeitschlitzblock ihrer Hierarchie in ihrem Zeitschlitz jeweils einen Datensatz eines Verbrauchszählers weitergeben, den sie entweder selbst direkt empfangen hat oder dessen Daten sie von einem ihrer h + 1-Nachbarn übertragungsfrei empfangen hat. Auf diese Weise könnte sie dann diesen Datensatz an die in Abwärtsrichtung nächste Hierarchieebene h - 1 weitergeben. Diese nächste Hierarchieebene könnte dann feststellen, daß ihr diese Daten entweder aus einer direkten Übertragung direkt vom betrachteten Verbrauchsmesser oder durch Weitergabe von einer anderen Station mit h + 1 zu einem früheren Zeitpunkt bereits bekannt ist, und sie könnte dann die mehrfach empfangenen Daten nur einmal weitergeben. Auf diese Weise würden dann eventuelle Datenredundanzen automatischen Strom sparend schrittweise eliminiert.

Auch dann verbleibt aber noch das Problem der Datenkonzentration und damit der Pufferung von Daten. Da von jedem Verbrauchsmesser als primärer Datenquelle nur maximal ein aktueller Datensatz im Funknetz existiert, kann man die zu übertragenden Datensätze z.B. entsprechend der fortlaufenden Fertigungsnummer der Verbrauchsmesser eindeutig identifizieren. Alternativ kann man auch alle dem Funknetz zugeordneten Verbrauchsmesser einfach von 1 bis M durchnummerieren. In jedem Fall wird nun jedem Zeitsegment eine solche eindeutige verbrauchsmessernummer zugeordnet. Damit durchläuft in einem Zeitsegment nur genau ein Datensatz eines Verbrauchsmessers das Funknetzwerk. Dieser Datensatz kann zwar im gleichen Zeitsegment von mehreren Stationen (auch unterschiedlicher Hierarchie-Ebenen), die Daten auf Grund der Redundanz der Primär-Funkverbindungen gleichermaßen direkt vom Verbrauchsmesser empfangen hatten, erstmals ins Funknetzwerk eingebracht worden sein, und es kann daher bei einer Datensammelstation innerhalb eines Zeitschlitzblockes zu einem mehrfachen Empfang desselben Datensatzes in verschiedenen Zeitschlitzblockes kommen. Weiterzugeben ist dann aber im folgenden Zeitschlitzblock stets nur ein Datensatz, so daß keine Pufferung von solchen weiterzugebenden Datensätzen notwendig ist.

Gleichzeitig kann nun jede Datensammelstation nach dem ersten Empfang eines Datensatzes alle weiteren Empfangszeitschlitze schließen, da ihr ja nun die Daten des einzigen Verbrauchsmessers bekannt sind, die in diesem Zeitsegment und im Zeitschlitzblock h +1 ankommen können. Sind ihr die Daten des Verbrauchsmessers des jeweiligen Zeitsegmentes aber bereits durch direkten, eigenen Empfang bekannt, so braucht die Datensammelsation natürlich überhaupt keinen Empfangszeitschlitz zu öffnen, wodurch noch weiter Strom gespart wird.

Weiß eine Datensammelstation aus einem Vortest (siehe unten), was die funktechnischen Nachbarn auf der Hierarchieebene h +1 sind, so reicht es aus, nur für deren Sendezeitschlitze jeweils einen Empfangszeitschlitz zu öffnen. Wüßte sie außerdem aus einem erweiterten Vortest auch noch, von welcher Datensammelstation der Hierarchieebene h +1 sie überhaupt irgendwelche Daten von dem jeweiligen Zeitsegment zugeordneten Verbrauchszählern empfangen kann, so könnte sie die Zahl der zu öffnenden Empfangszeitschlitze weiter reduzieren.

Die Zuordnung von Zählernummern zu Zeitsegmenten und damit die Zahl der aufeinanderfolgenden Abwärts-Zeitsegmente kann durch ein Aufwärts-Datenpaket der Datenverwaltungsstation allen Datensammelstationen mitgeteilt werden. Denkbar ist insbesondere die Übertragung der Nummer eines einzelnen Verbrauchsmessers oder einer Liste von auszulesenden Verbrauchsmessern. Die Anzahl der Einträge in der Liste bestimmt dann gleichzeitig, wieviele der folgenden Zeitsegmente Abwärts-Zeitsegmente sein sollen. Da jedes K-Zeitsegment zur regelmäßigen synchronisierung der Datensammelstationen ein Aufwärts-Zeitsegment ist, kann eine solche Liste auszulesender Verbrauchsmesser maximal K -1 Einträge enthalten, solange man zur Systemvereinfachung bei einer einfachen Trennung von Aufwärts-Zeitsegmenten und Abwärts-Zeitsegmenten bleibt, was ein starres Synchronisier-Zeitraster erlaubt.

Jede Datensammelstation, die eine solche Auslese-Zählerliste zur Weitergabe erhält, kann die Auslese-Zählerliste darauf prüfen, ob sie selbst die Daten eines der angeforderten Verbrauchsmessers kennt. Dann kann sie diese Daten in der Zähler-Ausleseliste entsprechend markieren, so daß die Datensammelstationen höherer Hierarchieebenen wissen, daß sie die Daten dieser Verbrauchsmesser nicht mehr zu senden brauchen, da diese auf einer niedereren Hierarchieebene schon bekannt sind.

Die Datensammelstationen werden ferner die empfangenen Daten der (maximal (K -1), also z.B. 14) Verbrauchmesser des laufenden Abwärts-Zeitsegmentes speichern. Kommt es bei der Abwärts-Datenübertragungen zu Störungen (insbesondere bei nichtredundanten Ästen oder Zweigen des Netzes), so kann es vorkommen, daß die Daten einzelner Verbrauchsmesser im letzten Zeitschlitzblock des Abwärts-Zeitsegmentes nicht bei der Datenverwaltungsstation ankommen. In diesem Fall kann die Datenverwaltungsstation nach Abschluß der Datenübertragung solche fehlenden Zählerdaten (evtl. gemeinsam mit weiteren neu angeforderten Zählernummern) mit einer entsprechenden Anforderungsliste nach oben reichen. Haben die dann angeforderten Daten beim ersten Versuch schon erfolgreich einige Hierarchie-Ebenen nach unten passiert, so müssen diese Daten wegen der Zwischenspeicherung dieser (wenigen) Werte im zweiten Anlauf nur noch den Restweg in Richtung auf die Datenverwaltungsstation zurücklegen, da die zwischenspeichernden Datensammelstationen ja nach oben mitteilen, daß eine Datenübertragung von oben nicht mehr notwendig ist. Dieses Verfahren einer positiven Nachforderung fehlender Daten durch die Datenverwaltungseinheit ist bei einer typischen Erfolgsrate von 90 % im Hinblick auf das Geringhalten des Stromverbrauches effizienter als eine Positiv-Quittierung der Datenübertragung durch die verschiedenen Stationen.

Zur dynamischen Aktualisierung des Funknetzwerkes muß jede Station ihre Hierarchienummer h sowie ihre funktechnischen Nachbarn mit (h +1) und mit (h -1) kennen. Hierzu benötigt man eine allgemeine Nachbarschafts-Analyse. Diese erfolgt in einer Voruntersuchung des Netzes so, daß alle Stationen in Analyse-Zeitabständen, die allen Stationen bekannt sind und nochmals größer sind als die Synchronisier-Zeitabstände (z.B. alle 60 Zeitsegmente, d.h. jede Stunde) in ihren jeweiligen Zeitschlitzen des ersten Zeitschlitzblockes dieses Zeitsegmentes eine kurze Identifikationsbotschaft aussenden, die u.a. ihre Stationsnummer sowie ihre momentane Hierarchienummer enthält. In den Analyse-Zeitabständen senden somit alle Stationen, während in den Synchronisier-Zeitabständen nur die Datenverwaltungsstation sendet. Jede Station kann nun bei Bedarf in dem Analyse-Zeitsegment ihre Nachbarschafts-Hierarchiedaten kontrollieren und ggf. aktualisieren.

Hat eine Station mehrfach hintereinander kein Synchronisier-Datenpaket mehr erhalten, so markiert sie ihre h-Nummer als ungültig. Hat nun eine Station z.B. wegen einer topologischen Hierarchie-Änderung keinen (h -1) Nachbarn mehr gefunden und deshalb auch keinen Synchronisierbefehl mehr empfangen, so kann sie sich stromsparend, nämlich nur innerhalb von N Zeitschlitzen eines einzigen Zeitschlitzblockes neu synchronisieren oder aktualisieren. Beim Synchronisieren wartet sie nur auf ein empfangenes Datenpaket. Beim Aktualisieren sucht sie sich gleich auch die Liste aller ihrer potentiellen funktechnischen Nachbarn der Ebenen (h -1) und (h +1). Dies erfolgt innerhalb eines einzigen Zeitschlitzblockes, während hierfür sonst alle (N +2) x (N -1) Empfangszeitschlitze aller Zeitschlitzblöcke eines Synchronisier-Zeitsegmentes verwendet müssen.

Voraussetzung für ein solches Vorgehen ist, daß die funktechnischen Nachbarn der betrachteten Station weiterhin synchronisiert sind und damit deren Hierarchie unverändert und bekannt ist.

Ist letzteres nicht der Fall oder ist - wie bei einer Erst-Inbetriebnahme - keinerlei Hierarchie des Funknetzwerkes bekannt, so wird in dem Netzanalyse-Zeitschlitzblock jede Station auf alle ihre Nachbarn hören. Zur endgültigen Hierarchienummer-Bestimmung sendet die Datenverwaltungsstation in vorgebenen Zeitabständen beim nächsten Synchronisier-Datenpaket nach dem oben erwähnten Broadcast-Nachbarermittlungszeitblock dann für eine allgemeine topologische Neuorientierung ein erweitertes Datenpaket, in welchem sie eine Liste all der Datensammelstationen anhängt, die sie empfangen konnte. Jede benachbarte Datensammelstation, die dieses erweiterte Synchronisier-Datenpaket empfängt und die ihre Nummer in dieser Liste vorfindet, weiß nun, daß sie die Hierarachienummer 1 hat, weil sie eine Botschaft der Datenverwaltungsstation empfangen konnte, in der diese bestätigt, daß sie umgekehrt die betrachtete Datensammelstation empfangen konnte. Auf diese Weise ist festgestellt, daß eine bidirektionale Funkverbindung zwischen der betrachteten Datensammelstation und der Datenverwaltungsstation besteht. Gleichzeitig kann in dem Broadcast-Zeitschlitzblock jede Datensammelstation eine entsprechende Liste von benachbarten Datensammelstationen aufbauen, die sie in dem Broadcast-Zeitsegment empfangen konnte. Bei den Datensammelstationen mit h = 1 sind dies gerade die Kandidaten für Nachbarn mit h = 2.

Bei der Weitergabe dieser Informationen definiert die betrachtete Datensammelstation dann ihre eigene Hierarchienummer zu h = 1 und hängt eine Liste aller von ihr empfangenen Nachbarn an, die damit potentielle Kandidaten für h = 2 sind. Die Feststellung von benachbarten Datensammelstationen mit niederer und höherer Hierarchienummer erfolgt dann analog für die höheren Hierarchieebenen. Auch die vollständige Neuanalyse der Netzwerktopologie ist somit innerhalb eines Zeitsegmentes abgeschlossen. Dies ermöglicht es, eine vollständige Neukonstruktion des Funknetzwerkes in regelmäßigen Zeitabständen vorzunehmen, ohne daß hierfür nennenswert Strom aufgewandt werden müßte.

## Patentansprüche

1. Verfahren zur Übertragung von Daten einer Mehrzahl von Sammelstationen für Daten, die jeweils eine Sendeeinheit und eine Empfangseinheit aufweist, zu einer Verwaltungsstation für Daten, die ebenfalls eine Sendeeinheit und eine Empfangseinheit aufweist, über einen gemeinsamen bidirektionalen Funkkanal, bei welchem
a) für die einzelnen Sammelstationen eine Hierarchienummer (h) bestimmt wird, die angibt, über wieviele Zwischenstationen die betrachtete Sammelstation die Verwaltungsstation erreichen kann,
b) den einzelnen Sammelstationen jeweils eine Stationskennung zugeordnet wird,
c) die von einer Sammelstation zu übermittelnden Datensätze zusammen mit der Stationskennung und der Hierarchienummer der Station zu einem Datenpaket zusammengefaßt werden,
**dadurch gekennzeichnet, daß**
d) die einzelnen Sammelstationen in Abständen durch von der Verwaltungsstation in Aufwärtsrichtung abgegebene Synchronisier-Datenpakete synchronisiert werden,
e) die Funkübertragung in aufeinanderfolgenden Zeitschlitzblöcken durchgeführt wird, die jeweils einer Hierarchienummer zugeordnet sind, und
f) für die einzelnen Sammelstationen jeweils ein Zeitschlitz innerhalb eines Zeitschlitzblockes zum Senden oder Empfangen vorgegeben wird.

2. Verfahren nach Anspruch 1, **dadurch gekennzeichnet, daß** die Sammelstationen in einem Abwärts-Datenübertragungsmodus ihre Empfangseinheiten nur für diejenigen Zeitschlitze von solchen Zeitschlitzblöcken aktivieren, die andere Sammelstationen mit um 1 höherer Hierarchienummer entsprechen, von denen sie Datenpakete übernehmen sollen und/oder in einem Aufwärts-Datenübertragungsmodus nur in Zeitschlitzen solcher Zeitschlitzblöcke aktiviert werden, die einer Station mit um 1 niedrigerer Hierarchienummer entsprechen, von der Datenpakete übernommen werden sollen.

3. Verfahren nach Anspruch 1 oder 2, **dadurch gekennzeichnet, daß** die Stationen nur in vorgegebenen Zeitschlitzen eines Zeitschlitzblockes zum Senden oder Empfangen aktiviert werden, deren Zeitschlitznummer einer funktechnisch benachbarten Station entsprechen.

4. Verfahren nach Anspruch 3, **dadurch gekennzeichnet, daß** Daten, welche die funktechnisch benachbarten Stationen benachbarter Hierarchieebenen angeben, in einer Aufwärts-Datenübertragung von der Verwaltungsstation her nach oben durch die Hierarchieebenen durchgegeben werden.

5. Verfahren nach einem der Ansprüche 1 bis 4, **dadurch gekennzeichnet, daß** zwischen einzelnen Zeitschlitzblöcken oder Gruppen von Zeitschlitzblöcken pseudostochastische Pausen der Datenübertragung eingeschoben werden.

6. Verfahren nach Anspruch 5, **dadurch gekennzeichnet, daß** ein zur pseudostochastischen Vorgabe der Funkübertragungspausen verwendeter Algorithmus für das durch die Gesamtheit der Sammelstationen und die Verwaltungsstation gebildete Funknetz spezifisch ist und in den einzelnen Stationen des Funknetzes abgelegt ist.

7. Verfahren nach einem der Ansprüche 1 bis 6, **dadurch gekennzeichnet, daß** in den Sammelstationen zum Synchronisieren ihrer Empfangseinheiten jeweils für mindestens denjenigen Zeitschlitz des Zeitschlitzblockes aktiviert wird, der derjenigen Station mit um 1 niederer Hierarchienummer entspricht, welcher der Zeitschlitz mit der niedersten Nummer zugeordnet ist.

8. Verfahren nach Anspruch 7, **dadurch gekennzeichnet, daß** die Sammelstationen zusätzlich ihre Empfangseinheiten für einen weiteren Zeitschlitz aktivieren, der einer weiteren Sammelstation mit um 1 niederer Hierarchienummer entspricht.

9. Verfahren nach einem der Ansprüche 1 bis 8, **dadurch gekennzeichnet, daß** die Sammelstationen in gleicher Weise wie sie untereinander arbeiten mit Telemetrie-Verbrauchsmessern zusammenarbeiten und jedem der Verbrauchsmesser ein Zeitschlitz zugeordnet wird.

10. Verfahren nach Anspruch 9, **dadurch gekennzeichnet, daß** in einem durch die Gesamtheit der Zeitschlitzblöcke unterschiedlicher Hierarchienummer gebildeten Zeitsegment nur ein Datensatz eines Verbrauchsmessers übermittelt wird und die Sammelstationen jeweils nach Erhalt eines Datenpaketes ihre Empfangseinheiten für den Rest eines durch die Zeitblöcke unterschiedlicher Hierarchienummer gebildeten Zeitsegmentes abschalten.

11. Verfahren nach Anspruch 9 oder 10, **dadurch gekennzeichnet, daß** die Verwaltungsstation in einem Aufwärts-Zeitsegment festlegt, welche der Sammelstationen für die Datenübertragung zwischen einem Verbrauchsmesser und der Verwaltungsstation zum Empfangen und Senden zu aktivieren sind.

12. Verfahren nach Anspruch 11, **dadurch gekennzeichnet, daß** die Sammelstationen prüfen, mit welchen der angeforderten Verbrauchsmesser sie in direktem Kontakt stehen und die entsprechend markierte Verbrauchsmesser-Anforderungsliste an die Sammelstationen höherer Hierarchienummer weiterleiten.

13. Verfahren nach Anspruch 13, **dadurch gekennzeichnet, daß** die Sammelstationen die empfangenen Datenpakete der direkt mit ihnen zusammenarbeitenden Verbrauchsmesser speichern.

14. Verfahren nach einem der Ansprüche 1 bis 13, **dadurch gekennzeichnet, daß** den Sammelstationen im verglichen mit der Länge eines Zeitsegmentes langen Zeitabständen in einem Aufwärts-Zeitsegment ihre Stationsnummer und ihre Hierarchienummer übermittelt wird.

15. Verfahren nach Anspruch 14, **dadurch gekennzeichnet, daß** den Sammelstationen in dem genannten Aufwärts-Zeitsegment Informationen über die Hierarchienummern anderer funktechnisch mit ihr verbundenen Sammelstationen übermittelt werden.

16. Verfahren nach einem der Ansprüche 1 bis 15, **dadurch gekennzeichnet, daß** eine Sammelstation dann, wenn sie über längere Zeit kein Synchronisier-Datenpaket mehr empfangen hat, ihre Empfangseinheit nur noch für den der Datenverwaltungseinheit zugeordneten Zeitschlitz aktiviert.

17. Verfahren nach Anspruch 16, **dadurch gekennzeichnet, daß** in einem Analyse-Zeitschlitzblock alle Stationen in dem ihnen jeweils zugeordneten Zeitschlitz eine Analyse-Datenpaket senden, welches ihre Stationsnummer, ihre Hierarchienummer und die Liste ihrer funktechnischen Nachbarn beinhaltet.

18. Verfahren nach einem der Ansprüche 1 bis 17, **dadurch gekennzeichnet, daß** die Sammelstationen in einem Abwärts-Zeitsegment die Identifizierungsdaten von Verbrauchsmessern übertragen, von denen ihnen Meßergebnisse vorliegen, und die Sammelstationen ihre Empfangseinheiten nur für diejenigen Zeitschlitze anschalten, die nach unten gemeldeten Verbrauchsmessern zugeordnet sind.

19. Verfahren nach einem der Ansprüche 1 bis 18, **dadurch gekennzeichnet, daß** eine Sammelstation von einem oder von mehreren Verbrauchsmessern inkrementale Verbrauchsdaten empfängt, die inkrementalen Daten aufakumuliert und den so erhaltenen jeweiligen Zählerstand des Verbrauchsmessers in einem Abwärts-Zeitsegment an die Datenverwaltungsstation überträgt.

20. Verfahren nach einem der Ansprüche 1 bis 18, **dadurch gekennzeichnet, daß** eine Sammelstation von einem oder mehreren Verbrauchsmessern dessen Zählerstand empfängt und speichert und den jeweiligen Zählerstand in einem Abwärts-Zeitsegment zur Datenverwaltungsstation hin überträgt.

21. Verfahren nach einem der Ansprüche 1 bis 19, **dadurch gekennzeichnet, daß** eine Sammelstation Zählerstände von einem oder mehreren Verbrauchsmessern zu verschiedenen Zeitpunkten speichert und dann die Gesamtheit dieser Zählerstände zusammen als ein Datenpaket in einem Abwärts-Zeitsegment in Richtung zur Datenverwaltungeinheit überträgt.

22. Verfahren nach einem der Ansprüche 1 bis 21, **dadurch gekennzeichnet, daß** die Sammelstationen in Aufwärts-Zeitsegmenten Datenpakete der Verwaltungseinheit jeweils an eine Gruppe funktechnisch entfernter Verbrauchsmesser weiterleiten.

23. Verfahren nach Anspruch 22, **dadurch gekennzeichnet, daß** das Datenpaket der Verwaltungseinheit eine Anforderungsliste für einen Verbrauchszähler oder eine Gruppe von Verbrauchszählern enthält, die an eine oder mehrere Sammelstationen übertragen werden.

24. Verfahren nach einem der Ansprüche 1 bis 23, **dadurch gekennzeichnet, daß** die Verwaltungseinheit in Abständen ein Synchronisier-Datenpaket in einem Aufwärts-Zeitsegment an die Sammelstationen abgibt.

25. Verfahren nach einem der Ansprüche 1 bis 24, **dadurch gekennzeichnet, daß** die Verwaltungseinheit in zeitlichen Abständen ein Analyse-Datenpaket in einem Aufwärts-Zeitsegment an die Sammelstationen abgibt, welches die Sammelstationen veranlaßt, in den ihnen zugeordneten Zeitschlitzen jeweils ein Test-Datenpaket zu senden, welches ihre Stationsnummer, bisherige Hierarchienummer und vorzugsweise auch ihre funktechnischen Nachbarstationen umfaßt.

## Claims

1. Method for the transmission of data of a plurality of collection stations for data, each of which has a transmitting unit and a receiving unit, to a management station for data, each of which likewise has a transmitting unit and a receiving unit, via a common bidirectional radio channel, in which
a) a hierarchy number (h) is defined for the individual collection stations, which number indicates via how many intermediate stations the collection station in question can reach the management station,
b) the individual collection stations are each allocated a station identifier,
c) the data sets to be transmitted from a collection station are combined together with the station identifier and the hierarchy number of the station to form a data packet,
**characterised in that**
d) the individual collection stations are synchronised at intervals by means of synchronising data packets delivered by the management station in the upward direction,
e) the radio transmission is performed in sequential time slot blocks, each of which is allocated to a hierarchy number, and
f) for each of the individual collection stations, a time slot within a time slot block is preset for transmitting or receiving.

2. Method according to Claim 1, **characterised in that** the collection stations in a downward data transmission mode activate their receiving units only for those time slots of such time slots blocks which correspond other collection stations with a hierarchy number higher by 1 from which they are to accept data packets and/or in an upward data transmission mode are activated only in time slots of such time slot blocks which correspond to a station with a hierarchy number lower by 1 from which data packets are to be accepted.

3. Method according to Claim 1 or 2, **characterised in that** the stations are activated only in preset time slots of a time slot block for transmitting or receiving, the time slot number of which correspond to a neighbouring station with regard to radio communication.

4. Method according to Claim 3, **characterised in that** data which indicate the neighbouring stations, with regard to radio communication, of neighbouring hierarchy levels are passed in an upward data transmission from the management station upwards through the hierarchy levels.

5. Method according to one of Claims 1 to 4, **characterised in that** pseudostochastic breaks in the data transmission are inserted between individual time slot blocks or groups of time slot blocks.

6. Method according to Claim 5, **characterised in that** an algorithm used for the pseudostochastic presetting of the radio transmission breaks is specific to the radio network formed by the whole of the collection stations and the management station and is stored in the individual stations of the radio network.

7. Method according to one of Claims 1 to 6, **characterised in that** in the collection stations, for synchronising their receiving units, in each case for at least that time slot of the time slot block is activated which corresponds to that station with a hierarchy number lower by 1 which is allocated the time slot with the lowest number.

8. Method according to Claim 7, **characterised in that** the collection stations additionally activate their receiving units for a further time slot which corresponds to a further collection station with a hierarchy number lower by 1.

9. Method according to one of Claims 1 to 8, **characterised in that** the collection stations cooperate with telemetry supply meters in the same way as they cooperate with one another, and each of the supply meters is allocated a time slot.

10. Method according to Claim 9, **characterised in that**, in a time segment formed by the whole of the time slot blocks of a different hierarchy number, only one data set of a supply meter is transmitted and the collection stations, in each case after reception of a data packet, switch off their receiving units for the remainder of a time segment formed by the time blocks of a different hierarchy number.

11. Method according to Claim 9 or 10, **characterised in that** the management station defines, in an upward time segment, which of the collection stations are to be activated for receiving and transmitting for the data transmission between a supply meter and the management station.

12. Method according to Claim 11, **characterised in that** the collection stations check with which of the requested supply meters they are in direct contact and pass on the correspondingly marked supply meter request list to the collection stations of a higher hierarchy number.

13. Method according to Claim 13, **characterised in that** the collection stations store the received data packets of the supply meters cooperating directly with them.

14. Method according to one of Claims 1 to 13, **characterised in that** the collection stations are sent their station number and their hierarchy number, in an upward time segment, at time intervals which are long compared with the length of a time segment.

15. Method according to Claim 14, **characterised in that** the collection stations are sent, in the said upward time segment, information about the hierarchy numbers of other collection stations connected to it by radio communication.

16. Method according to one of Claims 1 to 15, **characterised in that** a collection station, if it has not received a synchronising data packet for quite a long time, activates its receiving unit only for the time slot allocated to the data management unit.

17. Method according to Claim 16, **characterised in that**, in an analysis time slot block, all the stations transmit, in the time slot respectively allocated to them, an analysis data packet which includes their station number, their hierarchy number and the list of their neighbours with regard to radio communication.

18. Method according to one of Claims 1 to 17, **characterised in that** the collection stations transmit, in a downward time segment, the identification data from supply meters of which measurement results are available to them, and the collection stations switch on their receiving units only for those time slots which are allocated to downwardly indicated supply meters.

19. Method according to one of Claims 1 to 18, **characterised in that** a collection station receives, from one or more supply meters, incremental consumption data, accumulates up the incremental data and transmits the resulting respective meter reading of the supply meter in a downward time segment to the data management station.

20. Method according to one of Claims 1 to 18, **characterised in that** a collection station receives and stores the meter reading from one or more supply meters and transmits the respective meter reading in a downward time segment towards the data management station.

21. Method according to one of Claims 1 to 19, **characterised in that** a collection station stores meter readings from one or more supply meters at different times and then transmits the whole of these meter readings together as a data packet in a downward time segment in the direction of the data management unit.

22. Method according to one of Claims 1 to 21, **characterised in that** the collection stations pass on, in upward time segments, data packets from the management unit in each case to a group of remote supply meters with regard to radio communication.

23. Method according to Claim 22, **characterised in that** the data packet from the management unit contains a request list for a supply meter or a group of supply meters which are transmitted to one or more collection stations.

24. Method according to one of Claims 1 to 23, **characterised in that** the management unit delivers a synchronising data packet in an upward time segment at intervals to the collection stations.

25. Method according to one of Claims 1 to 24, **characterised in that** the management unit delivers an analysis data packet in an upward time segment at time intervals to the collection stations, which data packet causes the collection stations to send, in the time slots allocated to them, in each case a test data packet which comprises their station number, previous hierarchy number and preferably also their neighbouring stations with regard to radio communication.

## Revendications

1. Procédé de transmission de données d'une pluralité de stations de collecte de données, qui présentent chacune une unité d'émission et une unité de réception, vers une station d'administration de données, qui présente également une unité d'émission et une unité de réception, par un canal radio bidirectionnel commun, selon lequel
a) un numéro hiérarchique (h) est déterminé pour les différentes stations de collecte, lequel indique via combien de stations intermédiaires la station de collecte considérée peut joindre la station d'administration,
b) un identificateur de station est affecté à chacune des différentes stations de collecte,
c) les jeux de données à transmettre par une station de collecte sont réunis avec l'identificateur de station et le numéro hiérarchique de la station en un paquet de données,
**caractérisé en ce que**
d) les différentes stations de collecte sont synchronisées à intervalles par des paquets de données de synchronisation envoyés en sens montant par la station d'administration,
e) la transmission radio est effectuée dans des blocs de tranches de temps successifs qui sont affectés chaque fois à un numéro hiérarchique et
f) pour les différentes stations de collecte, une tranche de temps à l'intérieur d'un bloc de tranches de temps est chaque fois prédéfinie pour l'émission ou la réception.

2. Procédé selon la revendication 1, **caractérisé en ce que**, dans un mode de transmission de données descendant, les stations de collecte activent leurs unités de réception seulement pour les tranches de temps des blocs de tranches de temps qui correspondent à d'autres stations ayant un numéro hiérarchique supérieur de 1, dont elles doivent prendre en charge des paquets de données, et/ou, dans un mode de transmission de données montant, seulement dans les tranches de temps des blocs de tranches de temps qui correspondent à une station ayant un numéro hiérarchique inférieur de 1 par laquelle des paquets de données doivent être pris en charge.

3. Procédé selon la revendication 1 ou 2, **caractérisé en ce que** les stations ne sont activées pour l'émission ou la réception que dans des tranches de temps prédéfinies d'un bloc de tranches de temps dont le numéro de tranche de temps correspond à une station radioélectriquement voisine.

4. Procédé selon la revendication 3, **caractérisé en ce que** des données qui indiquent les stations radioélectriquement voisines de niveaux hiérarchiques voisins sont transmises dans une transmission de données montante depuis la station d'administration vers le haut à travers les niveaux hiérarchiques.

5. Procédé selon l'une des revendications 1 à 4, **caractérisé en ce que** des pauses pseudostochastiques de la transmission de données sont insérées entre différents blocs de tranches de temps ou groupes de blocs de tranches de temps.

6. Procédé selon la revendication 5, **caractérisé en ce qu'**un algorithme utilisé pour la prédéfinition pseudo-stochastique des pauses de transmission radio est spécifique au réseau formé par la totalité des stations de collecte et la station d'administration et stocké dans les différentes stations du réseau radio.

7. Procédé selon l'une des revendications 1 à 6, **caractérisé en ce que** pour la synchronisation, les stations de collecte activent chaque fois leurs unités de réception au moins pour la tranche de temps du bloc de tranches de temps qui correspond à la station ayant un numéro hiérarchique inférieur de 1 à laquelle la tranche de temps de plus bas numéro est affectée.

8. Procédé selon la revendication 7, **caractérisé en ce que** les stations de collecte activent en plus leurs unités de réception pour une autre tranche de temps qui correspond à une autre station de collecte ayant un numéro hiérarchique inférieur de 1.

9. Procédé selon l'une des revendications 1 à 8, **caractérisé en ce que** les stations de collecte coopèrent avec des compteurs de consommation télémétriques de la même manière qu'elles travaillent entre elles et qu'une tranche de temps est affectée à chaque compteur de consommation.

10. Procédé selon la revendication 9, **caractérisé en ce que** seulement un jeu de données d'un compteur de consommation est transmis dans un segment de temps formé par la totalité des blocs de tranches de temps de numéro hiérarchique différent et qu'après réception d'un paquet de données, les stations de collecte désactivent leurs unités de réception pour le reste d'un segment de temps formé par les blocs de temps de numéro hiérarchique différent.

11. Procédé selon la revendication 9 ou 10, **caractérisé en ce que** la station d'administration définit dans un segment de temps montant lesquelles des stations de collecte sont à activer pour la réception et l'émission pour la transmission de données entre un compteur de consommation et la station d'administration.

12. Procédé selon la revendication 11, **caractérisé en ce que** les stations de collecte contrôlent avec lesquels des compteurs de consommation demandés elles sont en contact direct et transmettent la liste de demandes de compteurs de consommation marquée en conséquence aux stations de collecte de numéro hiérarchique supérieur.

13. Procédé selon la revendication 12, **caractérisé en ce que** les stations de collecte mémorisent les paquets de données reçus des compteurs de consommation coopérant directement avec elles.

14. Procédé selon l'une des revendications 1 à 13, **caractérisé en ce que** les stations de collecte reçoivent leur numéro de station et leur numéro hiérarchique dans un segment de temps montant à des intervalles de temps longs par rapport à la longueur d'un segment de temps.

15. Procédé selon la revendication 14, **caractérisé en ce que** les stations de collecte reçoivent dans ledit segment de temps montant des informations sur les numéros hiérarchiques d'autres stations de collecte en liaison radioélectrique avec elles.

16. Procédé selon l'une des revendications 1 à 15, **caractérisé en ce qu'**une station de collecte active son unité de réception seulement encore pour la tranche de temps affectée à l'unité d'administration de données si elle n'a plus reçu de paquet de données de synchronisation pendant quelque temps.

17. Procédé selon la revendication 16, **caractérisé en ce que**, dans un bloc de tranches de temps d'analyse, toutes les stations envoient dans la tranche de temps qui leur est affectée un paquet de données d'analyse qui contient leur numéro de station, leur numéro hiérarchique et la liste de leurs voisins radioélectriques.

18. Procédé selon l'une des revendications 1 à 17, **caractérisé en ce que** les stations de collecte transmettent dans un segment de temps descendant les données d'identification de compteurs de consommation pour lesquels elles disposent de résultats de mesure, et que les stations de collecte n'activent leurs unités de réception que pour les tranches de temps qui sont affectées à des compteurs de consommation signalés vers le bas.

19. Procédé selon l'une des revendications 1 à 18, **caractérisé en ce qu'**une station de collecte reçoit des données de consommation incrémentales d'un ou plusieurs compteurs de consommation, que les données incrémentales sont accumulées et le niveau de compteur ainsi obtenu du compteur de consommation est transmis à la station d'administration de données dans un segment de temps descendant.

20. Procédé selon l'une des revendications 1 à 18, **caractérisé en ce qu'**une station de collecte reçoit et mémorise le niveau de compteur d'un ou plusieurs compteurs de consommation et transmet le niveau de compteur respectif à la station d'administration de données dans un segment de temps descendant.

21. Procédé selon l'une des revendications 1 à 19, **caractérisé en ce qu'**une station de collecte mémorise des niveaux de compteur d'un ou plusieurs compteurs de consommation à différents instants et transmet ensuite la totalité de ces niveaux de compteur ensemble sous la forme d'un paquet de données à l'unité d'administration de données dans un segment de temps descendant.

22. Procédé selon l'une des revendications 1 à 21, **caractérisé en ce que** les stations de collecte retransmettent dans des segments de temps montants des paquets de données de l'unité d'administration chaque fois à un groupe de compteurs de consommation radioélectriquement éloignés.

23. Procédé selon la revendication 22, **caractérisé en ce que** le paquet de données de l'unité d'administration contient une liste de demandes pour un compteur de consommation ou un groupe de compteurs de consommation qui est transmise à une ou plusieurs stations de collecte.

24. Procédé selon l'une des revendications 1 à 23, **caractérisé en ce que** l'unité d'administration envoie à intervalles aux stations de collecte un paquet de données de synchronisation dans un segment de temps montant.

25. Procédé selon l'une des revendications 1 à 24, **caractérisé en ce que** l'unité d'administration envoie à intervalles de temps aux stations de collecte un paquet de données d'analyse dans un segment de temps montant, lequel a pour effet que les stations de collecte envoient dans les tranches de temps qui leur sont affectées un paquet de données de test qui contient leur numéro de station, leur numéro hiérarchique actuel et de préférence aussi leurs stations radioélectriquement voisines.
